# EUROPEAN PATENT APPLICATION

(11) **EP 4 764 795 A1**
(43) Date of publication of application: **24.06.2026**
(21) Application number: 25223459.6
(22) Date of filing: 15.12.2025
(51) Int. Cl.: G06F 3/01, G06F 3/03, G06F 3/042, G06F 3/04815

(54) **DISPLAY APPARATUS FOR INPUT OPERATIONS**

(30) Priority: 18.12.2024 JP 2024223625
(71) Applicant: Ikeda, Hiroyuki, Tokyo 106-0047 (JP)
(72) Inventor: Ikeda, Hiroyuki, Tokyo 106-0047 (JP)
(74) Representative: Kador & Partner Part mbB

(57) **Abstract**

It is possible to utilize a virtual object of a hand to enable accurate and easy operation on a virtual object for operation that is displayed appearing as if it is floating in a space. A display unit 20 is provided on a pair of glasses 10 to display an original image as an original of a two-dimensional virtual object for operation that allows a user to indicate operation details with a hand. A detection unit 72 of a control unit 70 detects motion of the hand of the user using image data of an image captured by an imaging unit 30 and distance data of a distance measured by a camera unit (distance measurement unit) 31, and outputs information related to the motion of the hand. A display control unit 71 of the control unit 70 controls, based on the information related to the motion of the hand transmitted from the detection unit 72, display of a virtual object of a hand, which is an image that is modeled after a hand, such that the virtual object of the hand moves on a same plane as the two-dimensional virtual object for operation in response to the motion of the hand.

## Description

### BACKGROUND OF THE INVENTION

### Field of the Invention

The present invention relates to a display apparatus that displays virtual images (videos) in an environment using augmented reality (AR), virtual reality (VR), mixed reality (MR), or the like.

### Description of the Related Art

In recent years, various types of head-mounted display devices have been manufactured and sold that allow users to experience extended reality (XR), which includes not only virtual reality and augmented reality, but also mixed reality, which overlays content on the real world to display, and the like. In such devices, for example in an environment using mixed reality, a user can perform key input operations on a keyboard (virtual object for operation) displayed as a computer graphics (CG) image or video, using a virtual object of a hand displayed that is modeled after the user's own hand (see, for example, Patent Literatures 1 to 3).

### Related Art Documents

### Patent Literatures

Patent Literature 1: Japanese Patent No. 6676071
Patent Literature 2: Japanese Patent No. 6999662
Patent Literature 3: Japanese Unexamined Patent Application Publication No. 2019-192243

### SUMMARY OF THE INVENTION

### Problems to be Solved by the Invention

However, with the above-described conventional devices, for example, for input operations performed to a keyboard displayed to appear as if it is floating in a space in the above-described environment using a virtual object of the hand displayed to appear as if it is floating in the same space, it is difficult to grasp the relative positions of the rear and front, making it impossible to perform accurate key input operations. For example, when the user moves an index finger in the depth direction of a key on a keyboard (virtual object for operation) to press the key with the finger, a determination may be made that any of the other keys located above, below, to the left or right of that key has been pressed. When such a determination is made, the user needs to cancel the key operation the user has just performed and then perform an input operation on the same key again. Therefore, in the conventional devices, input work using a keyboard (virtual object for operation) displayed in the above-described environment not only causes frequent input errors, but also often requires re-input, which results in a problem that input operations cannot be performed comfortably.

The present invention has been made in light of the above-described circumstances, and an objective thereof is to provide a display apparatus that utilizes a virtual object of a hand that is modeled after a hand of a user, to enable accurate and easy operation on a virtual object for operation that is displayed appearing as if it is floating in a space.

### Means of Solving the Problems

To achieve the objective described above, the present invention is a display apparatus configured to allow a user to see a virtual image, the display apparatus including: a wearable object to be worn on a head of the user; a display unit provided on the wearable object to display an original image that is an image as an original of the virtual image; an imaging unit configured to capture an image of a hand of the user and output image data of the captured image; a detection unit configured to detect motion of the hand of the user using the image data obtained by the imaging unit and output information related to the motion of the hand; and a display control unit configured to control display of the virtual image by controlling the display unit, wherein the display control unit is configured to: control the display unit to control display of a two-dimensional virtual object for operation that is used for the user to indicate operation details with the hand and a virtual object of a hand that is modeled after the hand, as elements of the virtual image; and control display of the virtual object of the hand such that the virtual object of the hand moves on a same plane as the two-dimensional virtual object for operation in response to the motion of the hand, based on the information related to the motion of the hand transmitted from the detection unit.

For example, as the virtual object for operation, a model of a keyboard, a model of a numeric keypad, a model of a console of a remote controller, or the like can be used.

In the display apparatus of the present invention, the display control unit controls display of the virtual object of the hand such that the virtual object of the hand moves on the same plane as the two-dimensional virtual object for operation in response to the motion of the hand of the user. This does not allow the virtual object of the hand to move in the depth direction relative to the virtual object for operation, and allows the virtual object of the hand to move only on the same plane as the virtual object for operation. Thus, the user can move the user's own hand to move the virtual object of the hand accurately and easily to a desired location on the virtual object for operation. Therefore, as compared to the conventional devices in which the user operates a keyboard (virtual object for operation) displayed appearing as if it is floating in a space with the user's own hand, the display apparatus of the present invention can be used to enable accurate and easy operation on the virtual object for operation.

Further, it is desirable that the display apparatus of the present invention further includes an action determination unit configured to: determine, based on the image data obtained by the imaging unit and the information related to the motion of the hand transmitted from the detection unit, whether or not the user has performed, using the hand, one of specific actions including a tap (click) action and a scroll action; and output information related to details of the specific action made by the hand determined to have been performed as the one of specific actions. In this case, when the information related to details of the specific action is transmitted from the action determination unit, the display control unit recognizes the details of the specific action performed by the user, and can control display of the virtual object for operation and/or display of the virtual object of the hand in accordance with the recognized details of the specific action.

For example, when information indicating that a tap (click) action has been performed is transmitted from the action determination unit as the information related to the details of the specific action, the display control unit can control display of the virtual object of the hand such that a part of the virtual object of the hand corresponding to a finger that performed the tap (click) action moves in the depth direction relative to the virtual object for operation. Alternatively, when the information indicating that a tap (click) action has been performed is transmitted from the action determination unit as the information related to the details of the specific action, the display control unit can control display of the virtual object for operation such that a part of the virtual object for operation where a part of the virtual object of the hand corresponding to a finger that performed the tap (click) action is positioned is displayed, for example, highlighted.

In the display apparatus of the present invention, the imaging unit may have a function as a distance measurement unit configured to measure a distance to the hand of the user and output distance data of the measured distance, and the detection unit may calculate three-dimensional position information for identifying the hand based on the image data and the distance data obtained by the imaging unit, and acquire the calculated three-dimensional position information as the information related to the motion of the hand. In this case, the display control unit can determine a display position of the virtual object of the hand on the virtual object for operation, based on the three-dimensional position information for identifying the hand transmitted from the detection unit.

Further, the display apparatus of the present invention may further include a position information measurement unit configured to measure three-dimensional position information of the hand of the user in an optionally set three-dimensional coordinate system and acquire the measured three-dimensional position information as the information related to the motion of the hand. In this case, the display control unit can determine the display position of the virtual object of the hand on the virtual object for operation, based on the three-dimensional position information for identifying the hand transmitted from the position information measurement unit.

In the display apparatus of the present invention, the detection unit may determine whether or not one, some, or all of fingers of the hand of the user are clenched, based on the image data obtained by the imaging unit, and when one, some, or all of fingers of the hand of the user are determined to be clenched, output information indicating that one, some, or all of fingers of the hand of the user are clenched, and when the information indicating that one, some, or all of fingers of the hand of the user are clenched is transmitted from the detection unit, the display control unit may use, at user's option, a virtual object of a mouse body that is modeled after a mouse body and a virtual object of a mouse cursor that is modeled after a mouse cursor, instead of the virtual object of the hand, to display the virtual object of the mouse body at a predetermined location in the virtual image, and may control, based on the information related to the motion of the hand transmitted from the detection unit, display of the virtual object of the mouse cursor such that the virtual object of the mouse cursor moves on a same plane as the virtual object for operation in response to the motion of the hand.

In this case, for example, when information indicating that the hand of the user is clenched with one finger stretched out is transmitted from the detection unit, the action determination unit can determine, based on the information related to the motion of the hand transmitted from the detection unit, which one of the specific actions has been performed using the stretched finger, and when information indicating that a click action has been performed using one finger is transmitted from the action determination unit, the display control unit can recognize that a mouse click operation has been performed on a part of the virtual object for operation corresponding to the virtual object of the mouse cursor when the click action was performed. Further, when information indicating that the hand of the user is clenched with two fingers stretched out is transmitted from the detection unit, the action determination unit can determine, based on the information related to the motion of the hand transmitted from the detection unit, which one of the specific actions has been performed using which one of the stretched two fingers, and when information indicating that a click action has been performed using the left (or right) finger of the two fingers is transmitted from the action determination unit, the display control unit can recognize that a mouse left-click operation (or mouse right-click operation) has been performed on a part of the virtual object for operation corresponding to the virtual object of the mouse cursor when the click action was performed. Furthermore, when information indicating that all fingers of the hand of the user are clenched is transmitted from the detection unit, the action determination unit can determine, based on the information related to the motion of the hand transmitted from the detection unit, which one of the specific actions has been performed using the hand with all fingers clenched, and when information indicating that a click action has been performed using the hand with all fingers clenched is transmitted from the action determination unit, the display control unit can recognize that a mouse click operation has been performed on a part of the virtual object for operation corresponding to the virtual object of the mouse cursor when the click action was performed.

Note that, in a state of the display control unit controlling the display unit to display the virtual object of the mouse cursor, the display control unit may control motion of the virtual object of the mouse cursor by determining a movement amount of the virtual object of the mouse cursor in the virtual image, based on an actual movement distance of the hand calculated based on the information related to the motion of the hand transmitted from the detection unit.

Further, in the display apparatus of the present invention, the display control unit may be configured to control the display unit to display a three-dimensional virtual object for operation instead of the two-dimensional virtual object for operation, and in a state of controlling the display unit to display the three-dimensional virtual object for operation, the display control unit may control display of the virtual object of the hand such that the virtual object of the hand moves on a surface of the three-dimensional virtual object for operation or on a plane formed by a top surface of the three-dimensional virtual object for operation in response to the motion of the hand of the user.

Furthermore, in the display apparatus of the present invention, the virtual object of the hand may be a two-dimensional virtual object or a three-dimensional virtual object.

### Effects of the Invention

In the display apparatus of the present invention, the display control unit controls display of the virtual object of the hand such that the virtual object of the hand moves on the same plane as the two-dimensional virtual object for operation, on a surface of the three-dimensional virtual object for operation, or on a plane formed by a top surface of the three-dimensional virtual object for operation in response to the motion of the hand of the user. This does not allow the virtual object of the hand to move in the depth direction relative to the virtual object for operation, and allows the virtual object of the hand to move only on the same plane as the virtual object for operation. Thus, the user can move the user's own hand to move the virtual object of the hand accurately and easily to a desired location on the virtual object for operation. Therefore, as compared to the conventional devices in which the user operates a keyboard (virtual object for operation) displayed appearing as if it is floating in a space with the user's own hand, the display apparatus of the present invention can be used to enable accurate and easy operation on the virtual object for operation.

### BRIEF DESCRIPTION OF THE DRAWINGS

FIG. 1 is a schematic perspective view of a display apparatus according to a first embodiment of the present invention;
FIG. 2 is a schematic block diagram of the display apparatus according to the first embodiment;
FIGS. 3A and 3B each illustrate an arrangement of display units when a virtual image is projected onto both the left and right sides of the field of view of a user;
FIG. 4 illustrates an example of a two-dimensional virtual object for operation;
FIG. 5 illustrates an example of a character input screen serving as a virtual object for operation;
FIG. 6 illustrates an example of a search screen displayed in the character input screen;
FIG. 7 is a schematic diagram for explaining a method of correcting a movement distance of a hand;
FIG. 8 is a schematic diagram for explaining the method of correcting the movement distance of the hand;
FIG. 9 illustrates an actual hand length h0 of the user and a hand length h1 as viewed by a camera when the plane of the hand of the user is tilted to the rear;
FIG. 10 illustrates an actual finger length f0 of the user and a finger length f1 as viewed by the camera when the fingers of the user are tilted significantly to the rear from the back of the hand;
FIG. 11 illustrates a length g0 of a portion from the second joint (PIP joint) to the fingertip of an actual finger of the user and a length g1 of a portion from the second joint (PIP joint) to the fingertip of the finger as viewed by the camera, when portions from the second joints (PIP joints) to the fingertips of fingers of the user are tilted significantly to the rear from portions from the third joints (MCP joints) to the second joints (PIP joints) of the fingers;
FIG. 12 illustrates an example of a virtual object of a hand displayed on the same plane as the virtual object for operation;
FIG. 13 illustrates an example of virtual objects of hands displayed on the same plane as the virtual object for operation;
FIG. 14 is a flowchart of the procedure for a display process of a virtual object for operation and a virtual object of a hand, performed by a display control unit in the display apparatus according to the first embodiment;
FIG. 15 is a flowchart of the processing procedure for display control of a virtual image (including virtual objects) described in step S16 in the processing flow of FIG. 14;
FIG. 16 is a schematic block diagram of a display apparatus according to a second embodiment of the present invention;
FIG. 17 is a schematic block diagram of a display apparatus according to a third embodiment of the present invention;
FIG. 18A is a schematic perspective view of a display apparatus according to a fourth embodiment of the present invention;
FIG. 18B is a schematic cross-sectional view of the display apparatus taken in directions of arrows A-A;
FIG. 19 is a schematic block diagram of the display apparatus according to the fourth embodiment;
FIG. 20A is a schematic perspective view of a display apparatus according to a modification example of the fourth embodiment;
FIG. 20B is a schematic cross-sectional view of the display apparatus taken in directions of arrows B-B;
FIG. 21 is a schematic block diagram of a display apparatus according to a fifth embodiment of the present invention;
FIG. 22 is a schematic block diagram of a display apparatus according to a sixth embodiment of the present invention;
FIG. 23 is a schematic front view of a display apparatus according to a seventh embodiment of the present invention;
FIG. 24 is a schematic block diagram of the display apparatus according to the seventh embodiment;
FIG. 25 is a schematic diagram of a display apparatus according to an eighth embodiment of the present invention;
FIG. 26 is a schematic block diagram of the display apparatus according to the eighth embodiment;
FIG. 27 is a schematic block diagram of a display apparatus according to a modification example of the eighth embodiment;
FIG. 28 is a schematic diagram of a display apparatus according to a ninth embodiment of the present invention;
FIG. 29 is a schematic block diagram of the display apparatus according to the ninth embodiment;
FIG. 30 is a schematic block diagram of a display apparatus according to a modification example of the ninth embodiment;
FIG. 31 illustrates an example of virtual objects of hands displayed on a two-dimensional virtual object for operation in a three-dimensional space;
FIG. 32 illustrates an example of a virtual object of a hand displayed on a three-dimensional virtual object for operation in a three-dimensional space;
FIG. 33 illustrates an example of a plane formed by a top surface of a stereoscopic keyboard image, that is, a key top surface;
FIGS. 34A and 34B each illustrate an example of a virtual object of a mouse body;
FIGS. 35A and 35B each illustrate an example of a virtual object of a mouse body;
FIG. 36 illustrates examples of a virtual object of a mouse body and a virtual object of a mouse cursor displayed on the same plane as a two-dimensional virtual object for operation;
FIG. 37 illustrates examples of a virtual object of a mouse body and a virtual object of a mouse cursor displayed in the same space as a three-dimensional virtual object for operation;
FIGS. 38A and 38B each illustrate an example of a virtual object for operation that is modeled after a numeric keypad of a smartphone; and
FIG. 39 illustrates an example of a virtual object for operation that is modeled after a console of a remote controller for an air conditioner.

### DESCRIPTION OF THE EMBODIMENTS

Embodiments of the invention according to the present application will be described below with reference to the drawings.

### First Embodiment

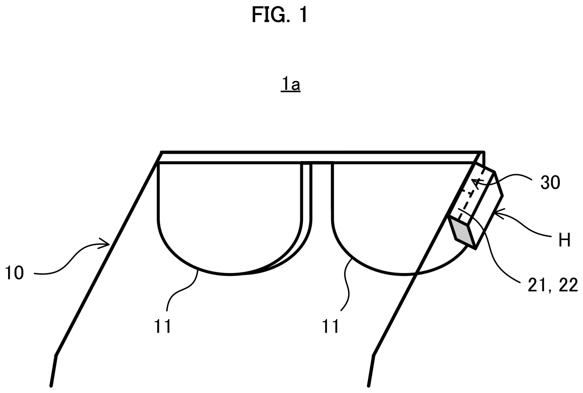

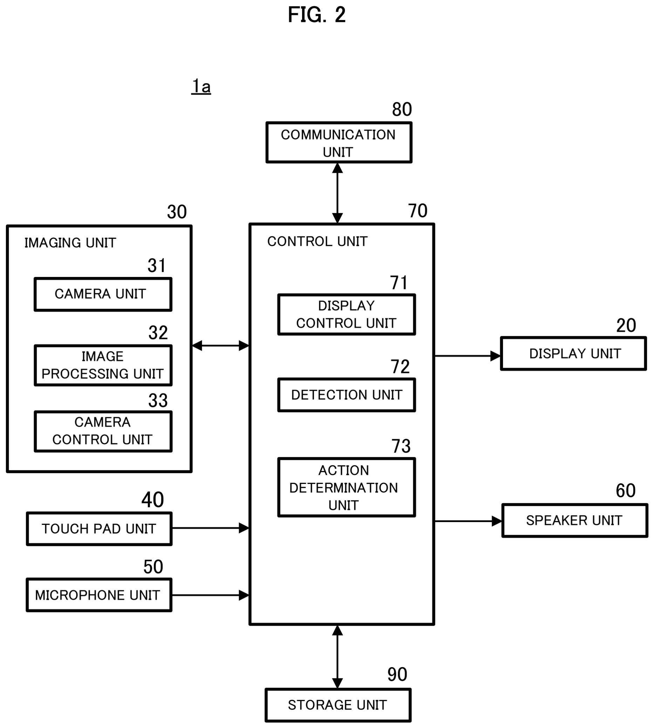

A display apparatus of the present invention is configured to display a virtual image (video) in an environment using augmented reality (AR), virtual reality (VR), mixed reality (MR), or the like. First, a display apparatus according to a first embodiment of the present invention will be described. FIG. 1 is a schematic perspective view of the display apparatus according to the first embodiment of the present invention, and FIG. 2 is a schematic block diagram of the display apparatus according to the first embodiment.

In the first embodiment, a case will be described in which the display apparatus of the present invention is applied to a glasses-type terminal that is worn on the head of a user like a pair of glasses. A display apparatus 1a according to the first embodiment is hardware for AR or MR that is configured to allow a user to see a virtual image, and includes, as illustrated in FIGS. 1 and 2, a pair of glasses 10 serving as a wearable object to be worn on the head of the user, a display unit 20 configured to display an original image that is an image as an original of the virtual image, an imaging unit 30 configured to capture an image of an area in front of the user, a touch pad unit 40, a microphone unit 50, a speaker unit 60, a control unit 70, a communication unit 80, and a storage unit 90. The display unit 20, the imaging unit 30, the touch pad unit 40, the microphone unit 50, the speaker unit 60, the control unit 70, the communication unit 80, and the storage unit 90 are provided on the pair of glasses 10.

The display unit 20 is a transmissive prism display. Specifically, the display unit 20 includes a small projector 21 having, for example, a liquid crystal panel (display device), an optical system 22, and a half mirror (not illustrated). Examples of the optical system 22 to be used include a lens, a reflecting mirror, a prism, a light guide plate, and a waveguide. Further, as the optical system 22, other optical systems may be used instead of the optical system described above. The half mirror serves as a projection unit on which an image or video displayed on the display device of the small projector 21 is projected via the optical system 22. For example, the small projector 21 and the optical system 22 are arranged in a single housing H, and the housing H is attached to a right temple portion of the pair of glasses 10 as illustrated in FIG. 1. In this case, the half mirror is embedded in, for example, a prism (not illustrated) located in front of a lens part 11 for the right eye of the pair of glasses 10. An image or video displayed on the liquid crystal panel of the small projector 21 is projected onto the half mirror via the optical system 22. In fact, a very small image or video is displayed on this half mirror. When using the display apparatus 1a according to the first embodiment, the user can see an image of a very small image or video displayed on the half mirror as if it is floating in a space. The image or video appearing as if it is floating in this space is a virtual image. As used herein, a virtual image representing an object is also referred to as a virtual object of that object. A virtual object can be considered as an element of a virtual image. On the other hand, a very small image or video to be displayed on the half mirror is the "original image," which is an image as an original of a virtual image. In this way, by attaching the small projector 21 to a right temple portion of the pair of glasses 10, a virtual image can be projected onto the right side of the field of view of the user. Note that the small projector 21 can overlay a plurality of images or videos to project. For example, the small projector 21 can overlay an image representing an operation screen that allows the user to indicate operation details with a hand(s) and a video representing an external environment (e.g., the outside scene or the interior of a room) to project.

Further, as described above, when the original image of a virtual image (including virtual objects) is displayed on the half mirror of the display unit 20, the user sees the virtual image through the display unit 20, which appears as if it is floating in a space. In this regard, the display unit 20 can be considered to be for displaying a virtual image. Thus, for simplicity herein, this is also expressed as "the display unit displays a virtual image."

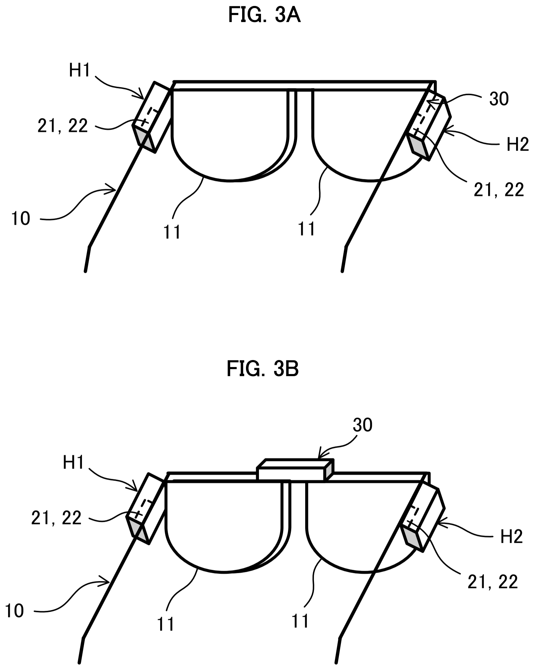

Note that, if it is desired to project a virtual image (including virtual objects) onto the left side of the field of view of the user, the above-described housing H may be attached to a left temple portion of the pair of glasses 10, and the half mirror may be attached in front of the lens part for the left eye. Further, a virtual image (including virtual objects) may be projected onto both the left and right sides of the field of view of the user. FIGS. 3A and 3B each illustrate an arrangement of display units when a virtual image is projected onto both the left and right sides of the field of view of the user. In these cases, housings H1 and H2 each containing the small projector 21 and the optical system 22 are attached to the temple portions, respectively, on the left and right sides of the pair of glasses 10, as illustrated in FIGS. 3A and 3B, and half mirrors (not illustrated) are also attached in front of the lens parts 11, 11 for the left and right eyes. These left and right small projectors 21, 21 can project different images or videos. In particular, for example, by projecting an image for the left eye onto the left small projector 21 and an image for the right eye onto the right small projector 21, the display apparatus 1a can display a three-dimensional virtual image (including virtual objects) to be stereoscopically seen by the user.

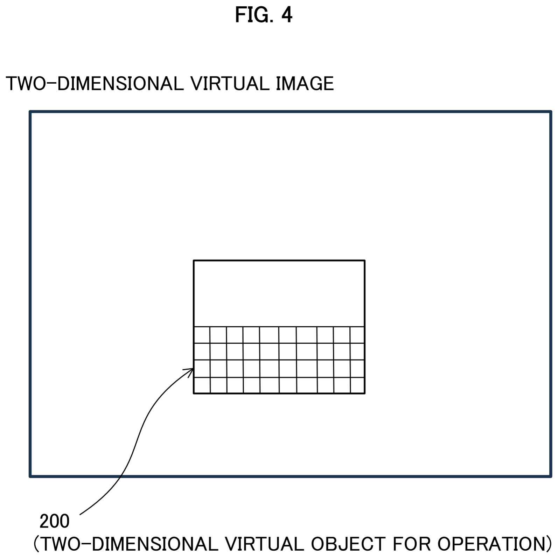

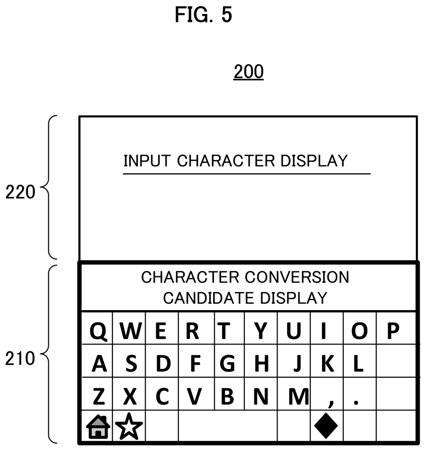

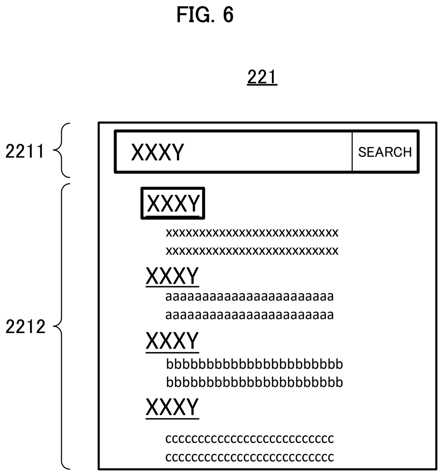

The display apparatus 1a according to the first embodiment can display a virtual object of a specific object. The virtual object of the specific object is, for example, an image that is modeled after that object. In particular, the display apparatus 1a according to the present embodiment can display, as a two-dimensional virtual object, a virtual object for operation that is modeled after an object that allows the user to indicate operation details with a hand(s). In this case, a very small original image corresponding to the virtual object for operation is displayed on the half mirror of the display unit 20. FIG. 4 illustrates an example of a two-dimensional virtual object for operation. The display apparatus 1a according to the present embodiment may in general overlay an actual outside scene or a video of the outside scene onto a two-dimensional virtual object for operation to project. However, in the example of FIG. 4, the display apparatus 1a displays only the virtual object for operation serving as a two-dimensional virtual object. The virtual object for operation illustrated in FIG. 4 is a character input screen 200. FIG. 5 illustrates an example of the character input screen 200 serving as a virtual object for operation. As illustrated in FIG. 5, the character input screen 200 has a keyboard image 210 and a display area 220 for displaying input characters and the like. The keyboard image 210 includes a plurality of character key images associated with characters (including symbols) and a plurality of function key images to which specific functions are assigned. Further, for example, a search screen is displayed in the display area 220. FIG. 6 illustrates an example of a search screen displayed in the character input screen 200. The search screen 221 is for searching Internet sites, and has a keyword input field 2211 and a search result display field 2212 for displaying search results.

Note that, as used herein, the term "two-dimensional" virtual image (including virtual objects) refers to a virtual image that represents how a certain object is distributed on a two-dimensional plane in a two-dimensional space or a three-dimensional space. On the other hand, the term "three-dimensional" virtual image (including virtual objects) refers to a virtual image that represents how a certain solid object is distributed in a three-dimensional space.

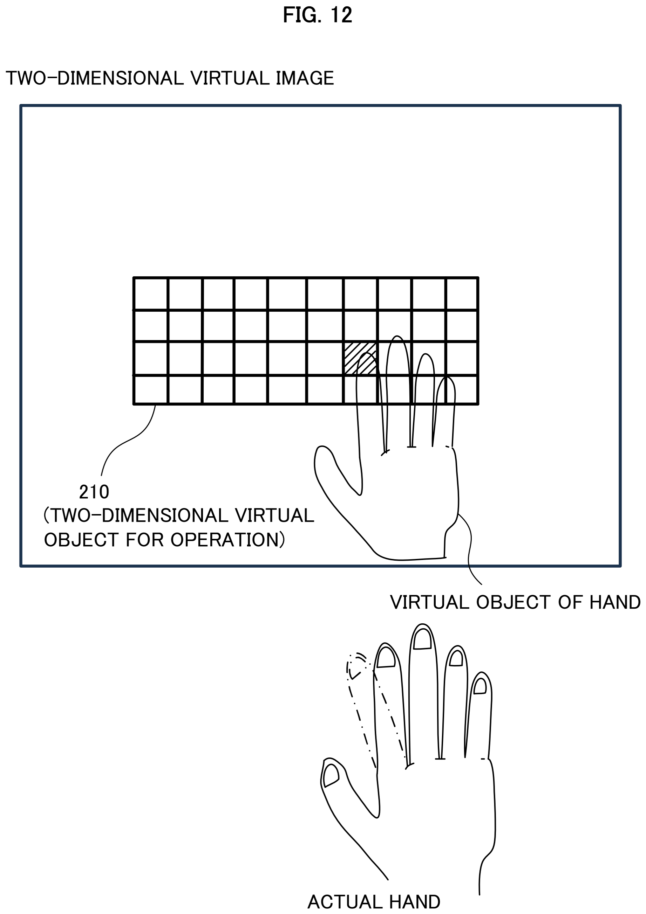

Further, in the first embodiment, in a state of the display apparatus 1a displaying a virtual object for operation serving as a two-dimensional virtual object, a virtual object of a hand that is modeled after a hand of the user can be displayed on the same plane as the two-dimensional virtual object for operation (e.g., see FIG. 12 described later). In this case, the original image corresponding to the virtual object of the hand is displayed on the half mirror of the display unit 20. Examples of the virtual object of the hand to be used include a two-dimensional virtual object representing a typical hand shape. By moving the user's own hand, the user can move the virtual object of the hand on the virtual object for operation. Further, when a portion of the virtual object of the hand corresponding to the user's fingers is positioned at a desired portion on the virtual object for operation, the user can issue various instructions related to the virtual object for operation to the control unit 70 by performing specific actions (gestures) using the user's own hand, including a tap (click) action, a scroll action, a pinch-in action, and a pinch-out action. Here, the tap (click) action is an action of selecting a key image or the like of the virtual object for operation. The scroll action is an action of instructing that the virtual object for operation is to be moved up and down or left and right to display. The pinch-in action is an action of instructing that the virtual object for operation is to be reduced, and the pinch-out action is an action of instructing that the virtual object for operation is to be enlarged. The control unit 70 recognizes the content of such an instruction, and controls display of the virtual object for operation and display of the virtual object of the hand according to the recognized content of the instruction. For example, while the user sees the virtual object for operation which is the character input screen 200, the user moves the user's own hand to move the virtual object of the hand on the keyboard image 210, and when the index finger of the virtual object of the hand is positioned on a desired key image on the keyboard image 210, the user performs a tap (click) action (gesture) with the user's own index finger, thereby instructing input of a character corresponding to that key image. The phrase "performing a specific action using the hand" or the like as used herein is intended to include the meanings of both just "performing a specific action using the hand" and "performing a specific action using the finger(s) of the hand." It is assumed herein that the term "finger" includes the thumb in principle.

The imaging unit 30 is configured to capture an image of a hand of the user. In the first embodiment, the imaging unit 30 is provided on a temple portion of the pair of glasses 10 adjacent to the display unit 20 as illustrated in FIG. 1. Specifically, the imaging unit 30 is disposed in the housing H together with the small projector 21. However, the imaging unit 30 may be provided alone in an upper central portion of the pair of glasses 10 as illustrated in FIG. 3B. As illustrated in FIG. 2, the imaging unit 30 includes a camera unit 31, an image processing unit 32, and a camera control unit 33. The camera unit 31 has a lens and an imaging element. The camera unit 31 is located so as to be able to capture an image of a wide area including an area in front of the user. For example, when the user wearing the pair of glasses 10 sits, the camera unit 31 can capture an image of the user's hand placed on a table or on the user's lap. The image processing unit 32 is configured to perform, based on the image data of an image captured by the camera unit 31, a process of correcting the color and gradation of the captured image, and perform image processing such as compression of the image data. The camera control unit 33 controls the image processing unit 32 and controls the exchange of image data between the camera control unit 33 and the control unit 70. The image data of the image captured by the imaging unit 30 is transmitted to the control unit 70, and is stored in the storage unit 90 by the control unit 70. The imaging unit 30 also has a function that captures still images and a function that captures moving images.

The camera unit 31 also functions as a distance measurement unit configured to measure the distance to a hand of the user. In this case, for example, the camera control unit 33 is configured to include an autofocus control unit. This autofocus control unit controls the camera unit 31 to automatically focus on a subject at a predetermined position within the imaging range, and when an image of the automatically focused subject is captured, calculates distance data to the captured subject. The resulting distance data measured by the camera unit (distance measurement unit) 31 is transmitted to the control unit 70, and is stored in the storage unit 90 by the control unit 70. Note that, in measuring the distance to a hand, the camera unit 31 may measure the distance to the tip of each finger in addition to the distance to the hand. Thus, in a case where the distance measurement unit measures the distance to a finger, the phrase "distance to the hand" or the like as used herein means "distance to the finger of the hand."

Note that, in the first embodiment, a case has been described in which the imaging unit 30 has one camera unit 31, which captures an image of a hand of the user and measures the distance to the hand; however, in general, the imaging unit 30 may be configured to include two or more camera units. For example, in a case where two camera units are provided in the imaging unit 30, one camera unit may be used to capture an image of an external environment including the hand of the user, and the other camera unit may be used to measure the distance to the hand of the user. Further, in a case where three or more camera units are provided in the imaging unit 30, one camera unit can be used to capture an image of an external environment including the hand of the user, and the other camera units can be used to measure the distance to the hand of the user. In this case, by measuring the distance to the hand of the user using a plurality of camera units, the position of the hand of the user can be obtained as three-dimensional position information, and the distance to the hand of the user can be calculated using that three-dimensional position information. Furthermore, a plurality of camera units may be used to capture images of an external environment including the hand of the user. In addition, in the first embodiment, even when the user places the user's hand on a desk, the user's lap, or the like, the camera unit 31, which captures an image of the hand, may be installed facing downward or diagonally downward so that an image of the hand can be captured from a direction such that the hand is perpendicular or nearly perpendicular to the optical axis of the camera unit 31. Further, the camera unit 31 may be configured so that its orientation can be moved downward or diagonally downward.

Further, the camera unit that measures the distance to a hand of the user is not limited to a normal natural light camera. An infrared camera or a combination of a natural light camera and a depth sensor (such as an infrared sensor) may be used. Furthermore, the distance measurement unit that measures the distance to a hand of the user is not limited to a camera. A distance sensor, laser, radar, or the like may be used. Furthermore, the distance to a subject (hand) may be measured using "monocular camera distance measurement technology" by software, recently developed by Toshiba Information Systems (Japan) Corporation. Further, using these devices and technologies makes it possible to measure three-dimensional position information (XYZ coordinate information) of a subject (hand or finger) in an optionally set three-dimensional coordinate system to calculate the position of the subject (hand or finger). Based on the calculated three-dimensional position information of the subject (hand or finger), the distance from a predetermined reference position (coordinate origin) to the subject (hand or finger) can be calculated.

Provided on a temple portion of the pair of glasses 10 are the touch pad unit 40, the microphone unit 50, the speaker unit 60 which is a bone conduction type, various sensor units, a battery unit, and the like. Note that, in FIG. 1, the details of these components are omitted for simplification of the drawings. The touch pad unit 40 issues various instructions to the control unit 70 in response to the user performing a touch operation. The microphone unit 50 receives a user's voice in order to operate the display apparatus 1a according to the first embodiment by a voice instruction. The voice information received by the microphone unit 50 is transmitted to the control unit 70, and the control unit 70 analyzes the voice information. Further, the speaker unit 60 transmits voice information to the user by utilizing the vibration of the bone. In general, the speaker unit 60 is not limited to transmitting voice information to the user by utilizing the vibration of the bone. A normal speaker, earphone, headphone, or the like may be used.

The control unit 70 includes a central processing unit (CPU) and the like, and controls the entire display apparatus 1a according to the first embodiment. For example, the control unit 70 controls the display unit 20 to display the original image of the virtual image (including virtual objects) on the display unit 20, and controls the imaging unit 30 to capture an image. In response to an operation on the touch pad unit 40, the control unit 70 recognizes the content of the instruction issued by the operation, and executes processing according to the recognized content. When the microphone unit 50 receives voice, the control unit 70 recognizes the content of the received voice information, and executes processing in accordance with the recognized content. Further, the control unit 70 controls the voice information output from the speaker unit 60. Specifically, as illustrated in FIG. 2, the control unit 70 includes a display control unit 71, a detection unit 72, and an action determination unit 73.

The display control unit 71 controls the display unit 20 to control display of various virtual images including virtual objects for operation. Specifically, when the user issues a voice instruction through the microphone unit 50 or an instruction through an operation on the touch pad unit 40, the display control unit 71 selects the content of a virtual image (including virtual objects) to be displayed by the display apparatus 1a in accordance with the content of the instruction, and controls display of the virtual image by displaying the original image corresponding to the selected virtual image on the half mirror of the display unit 20. As a result, the original image corresponding to the virtual image indicated by the user is displayed on the half mirror of the display unit 20, so that the user can see the virtual image as if it is floating in a space. For example, when the original image of the virtual object for operation is displayed on the half mirror of the display unit 20, the user can see that the two-dimensional virtual object for operation is displayed appearing as if it is floating in a space. Further, in a state of the display unit 20 displaying the original image of the virtual object for operation, when the imaging unit 30 captures an image of a hand of the user, the display control unit 71 displays the original image corresponding to the virtual object of the hand that is modeled after the hand of the user on the half mirror of the display unit 20 in order to display the virtual object of the hand so that it appears as if it is floating in a space. As a result, the original image corresponding to the virtual object of the hand is displayed on the half mirror of the display unit 20, so that the user can see the virtual object of the hand. Therefore, in this case, the user can see both the virtual object of the hand and the virtual object for operation at the same time.

The detection unit 72 detects the motion of the hand of the user (including the motion of the fingers) using the image data and distance data obtained by the imaging unit 30, and outputs information related to the motion of the hand. For example, as the information related to the motion of the hand, three-dimensional position information for identifying the hand can be used. As the three-dimensional position information, three-dimensional position coordinates (XYZ coordinates) in a three-dimensional orthogonal coordinate system are typically used. The three-dimensional orthogonal coordinate system can be set optionally. However, here, a three-dimensional orthogonal coordinate system is set in which the direction of the optical axis of the camera is the Z-axis direction, and the two orthogonal directions in a plane perpendicular to the optical axis of the camera are the X-axis direction and the Y-axis direction, respectively. In this case, the detection unit 72 first recognizes a hand in the image data captured by the imaging unit 30 using a general image recognition method, and calculates two-dimensional position information (XY coordinate information) to identify the recognized hand. In other words, this two-dimensional position information is two-dimensional position information for identifying the hand on a plane perpendicular to the optical axis of the camera unit 31 when the hand is projected onto the plane. Next, the detection unit 72 calculates one-dimensional position information (Z coordinate information) for identifying the hand in the optical axis direction of the camera unit 31 based on the calculated two-dimensional position coordinates (XY coordinate information) and the distance data obtained by the imaging unit 30. Then, three-dimensional position information (XYZ coordinate information) in a three-dimensional orthogonal coordinate system for identifying the hand is composed of the two-dimensional position information and the one-dimensional position information. The detection unit 72 acquires such three-dimensional position information for identifying the hand, for example at regular time intervals, and transmits the acquired three-dimensional position information to the action determination unit 73 and the display control unit 71 as information related to the motion of the hand. Note that examples of the three-dimensional position information for identifying the hand to be used include three-dimensional position information of the center of the back of the hand, and in addition to this three-dimensional position information of the center of the back of the hand, three-dimensional position information of the tip of each finger may be used. Further, as the three-dimensional position information for identifying the hand, three-dimensional position information of a fingertip or three-dimensional position information of the first joint, second joint, or third joint (DIP joint, PIP joint, or MCP joint. In a case of a thumb, IP joint, MCP joint, or CMC joint.) of a finger may be used. Thus, the phrase "three-dimensional position information for identifying the hand" as used herein includes the meaning of "three-dimensional position information for identifying a finger(s) of the hand." In addition herein finger joints are referred to as a first joint, second joint, and third joint in order from a fingertip to a palm.

Based on the image data obtained by the imaging unit 30 and the information related to the motion of the hand transmitted from the detection unit 72, the action determination unit 73 determines the details of the action made by the hand. In this determination, for example, a general image recognition method is used. Specifically, the action determination unit 73 determines whether or not the user has performed, using the hand, one of specific actions (gestures) including a tap (click) action, a scroll action, a pinch-in action, and a pinch-out action. Then, when the action determination unit 73 determines that one of the specific actions has been performed, the action determination unit 73 generates information related to details of the specific action made by the hand and transmits the information to the display control unit 71. Examples of the information related to details of the specific action made by the hand to be generated include information indicating that a tap (click) action has been performed, information indicating that a scroll action has been performed, information indicating that a pinch-in action has been performed, and information indicating that a pinch-out action has been performed. Here, such information includes information for identifying the hand and/or finger(s) that performed the corresponding action (gesture).

As described above, the display control unit 71 controls the display unit 20 to control display of, as elements of a virtual image, a two-dimensional virtual object for operation that allows the user to indicate operation details with a hand and a virtual object of the hand that is modeled after the hand. Further, in a state of the display apparatus 1a displaying a two-dimensional virtual object for operation, the display control unit 71 controls, based on the information related to the motion of the hand transmitted from the detection unit 72, display of the virtual object of the hand such that the virtual object of the hand moves on the same plane as the two-dimensional virtual object for operation in response to the motion of the hand of the user. Specifically, in controlling display of the virtual object of the hand, the display control unit 71 determines the display position of the virtual object of the hand on a plane including the virtual object for operation, based on the two-dimensional position information (XY coordinate information) for identifying the hand on a plane perpendicular to the optical axis of the camera unit 31, from the three-dimensional position information for identifying the hand transmitted from the detection unit 72. In other words, the plane perpendicular to the optical axis of the camera unit 31 is deemed as being parallel to the plane including the virtual object for operation. Further, the display control unit 71 determines the amount of motion of the virtual object of the hand on the plane including the virtual object of the hand, based on the actual movement distance of the hand calculated based on the information related to the motion of the hand transmitted from the detection unit 72. Here, the actual movement distance of the hand can be calculated using pieces of three-dimensional position information (XYZ coordinate information) before and after the movement of the hand. In this case, the three-dimensional position information (XYZ coordinate information) is not limited to being composed of the two-dimensional position information (XY coordinate information) for identifying the hand on the plane perpendicular to the optical axis of the camera unit 31 and the one-dimensional position information (Z coordinate information) for identifying the hand in the optical axis direction of the camera unit 31, as described above. Three-dimensional position information of a hand in any three-dimensional coordinate system may be used. Further, the three-dimensional position information (XYZ coordinate information) of the hand or finger(s) in an optionally set three-dimensional coordinate system can be measured, and the movement distance of the hand or finger(s) can be calculated from the difference in coordinates before and after the movement of the hand or finger(s).

Incidentally, the actual movement distance of the hand can be calculated using the two-dimensional position information (XY coordinate information) for identifying the hand on the plane perpendicular to the optical axis of the camera unit 31, without using the one-dimensional position information (Z coordinate information) for identifying the hand in the optical axis direction of the camera unit 31. This point will now be described. First, when the plane of the hand of the user is perpendicular to the optical axis of the camera, the display control unit 71 can easily calculate the actual movement distance of the hand based on the two-dimensional position information (XY coordinate information) transmitted from the detection unit 72. However, when the user places the user's hand, for example on a table or on the user's lap, and the plane of the hand of the user is tilted relative to a plane perpendicular to the optical axis of the camera, the user may move the user's hand along the tilted plane to indicate operation details with the hand. In such a case, the display control unit 71 can calculate the actual movement distance of the hand by correcting the movement distance of the hand calculated based on the two-dimensional position information (XY coordinate information).

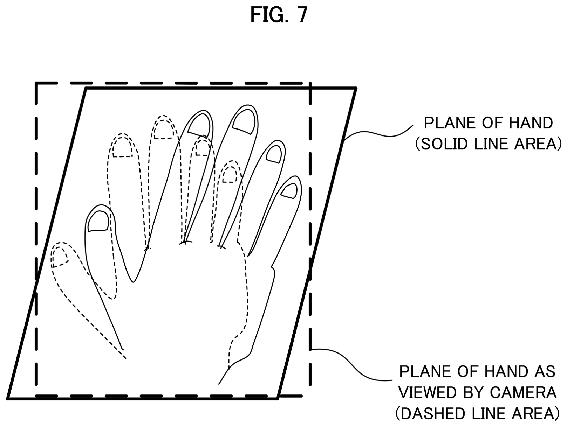

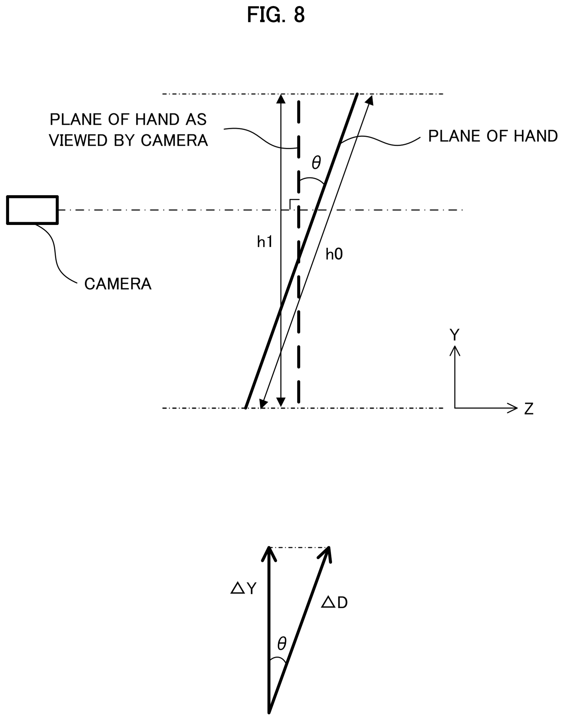

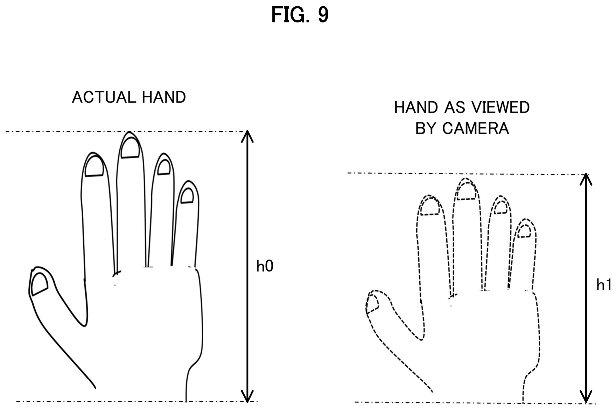

This method of correcting the movement distance of the hand will now be briefly described. FIGS. 7 and 8 are schematic diagrams for explaining the method of correcting the movement distance of the hand. As illustrated in FIGS. 7 and 8, it is assumed that the plane of the hand of the user does not coincide with a plane perpendicular to the optical axis of the camera, and is tilted to the rear. The angle between the plane of the hand of the user and a plane perpendicular to the optical axis of the camera is defined as θ. In FIG. 7, the plane of the hand of the user and the hand on that plane are represented by solid lines, and the plane of the hand as viewed by the camera (the plane of the hand obtained by projecting the plane of the hand of the user onto a plane perpendicular to the optical axis of the camera) and the hand on that plane are represented by dashed lines. The positional relationship between the plane of the hand of the user and the plane of the hand as viewed by the camera, when viewed from the side, is illustrated in FIG. 8. In FIG. 8 as well, the plane of the hand of the user is represented by a solid line, and the plane of the hand as viewed by the camera is represented by a dashed line. In FIG. 8, the plane of the hand as viewed by the camera is drawn so that the plane of the hand as viewed by the camera intersects with the plane of the hand of the user at a central portion thereof. Here, the position where the plane of the hand as viewed by the camera intersects with the plane of the hand of the user can be set to any position on the hand or finger(s), such as a portion corresponding to the base of the back of the hand or near a central portion of the finger(s). Now, let the actual length of the hand of the user be h0, and the length of the hand as viewed by the camera be h1. FIG. 9 illustrates the actual hand length h0 of the user and the hand length h1 as viewed by the camera when the plane of the hand of the user is tilted to the rear. In this case, the length of the hand as viewed by the camera is smaller than the actual length of the hand by a ratio of cos θ = h1/h0. It is now assumed that the user moves the user's own hand by a distance ΔD along the plane of the hand. For ease of explanation, it is assumed here that the user moves the hand upward or downward along the plane of the hand in FIG. 8. In this case, the display control unit 71 first calculates the hand length h1 and a distance ΔY that the hand has moved in the vertical direction (Y-axis direction) based on the image data obtained by the imaging unit 30 and the two-dimensional position information (XY coordinate information) transmitted from the detection unit 72. Next, by multiplying the movement distance of the hand in the vertical direction, ΔY, by the factor 1/cos θ = h0/h1, the actual movement distance of the hand, ΔD = ΔY × 1/cos θ = ΔY × (h0/h1) can be calculated. Note that the actual hand length h0 can be acquired in advance by capturing an image of the hand of the user that is located so that the plane of the hand is perpendicular to the optical axis of the camera.

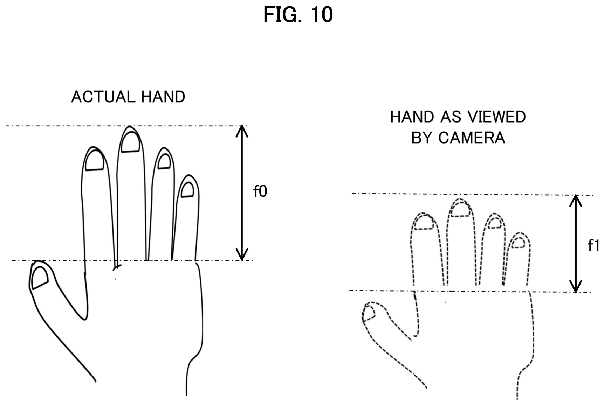

Further, when fingers of the hand of the user (portions from the third joints (MCP joints) to the fingertips) are tilted significantly toward the rear from the back of the hand, the ratio of the finger length as viewed by the camera to the actual finger length is smaller than the ratio of the length of the back of the hand as viewed by the camera to the actual length of the back of the hand. Here, FIG. 10 illustrates an actual finger length f0 of the user and a finger length f1 as viewed by the camera when the fingers of the user are tilted significantly to the rear from the back of the hand. In this case, the actual movement distance of the hand can be calculated more accurately by using the actual finger length f0 of the user in the vertical direction (Y-axis direction) and the finger length f1 in the vertical direction (Y-axis direction) as viewed by the camera, rather than using the actual hand length h0 of the user and the hand length h1 as viewed by the camera as described above. Specifically, the actual movement distance of the hand can be calculated by multiplying the movement distance of the hand in the vertical direction as viewed by the camera by f0/f1.

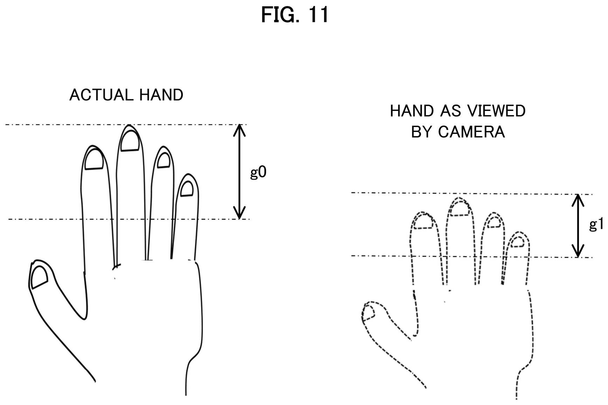

Furthermore, when portions from the second joints (PIP joints) to the fingertips of fingers of the hand of the user are tilted significantly to the rear from portions from the third joints (MCP joints) to the second joints (PIP joints) of the fingers, the actual movement distance of the hand can be calculated more accurately by using a length g0 of a portion from the second joint (PIP joint) to the fingertip of an actual finger of the user in the vertical direction (Y-axis direction) and a length g1 of a portion from the second joint (PIP joint) to the fingertip of a finger in the vertical direction (Y-axis direction) as viewed by the camera, rather than using the actual finger length f0 of the user and the finger length f1 as viewed by the camera. Here, FIG. 11 illustrates the length g0 of a portion from the second joint (PIP joint) to the fingertip of an actual finger of the user and the length g1 of a portion from the second joint (PIP joint) to the fingertip of a finger as viewed by the camera, when portions from the second joints (PIP joints) to the fingertips of fingers of the user are tilted significantly to the rear from portions from the third joints (MCP joints) to the second joints (PIP joints) of the fingers. In this case, the actual movement distance of the hand can be calculated by multiplying the movement distance of the hand in the vertical direction as viewed by the camera by g0/g1.

As can be seen from the above description, for the display control unit 71 to control display of a virtual object of the hand such that the virtual object of the hand moves on the same plane as the two-dimensional virtual object for operation in response to the motion of the hand of the user, distance data to the hand of the user is not essential. In this case, the detection unit 72 detects the motion of the hand of the user using the image data obtained by the imaging unit 30, and uses two-dimensional position information (XY coordinate information) for identifying the hand as information related to the motion of the hand of the user. Note that, in general, three-dimensional position information (XYZ coordinate information) of the hand and finger(s) in an optionally set three-dimensional coordinate system can be measured, and the measured three-dimensional position information can be used as information related to the motion of the hand.

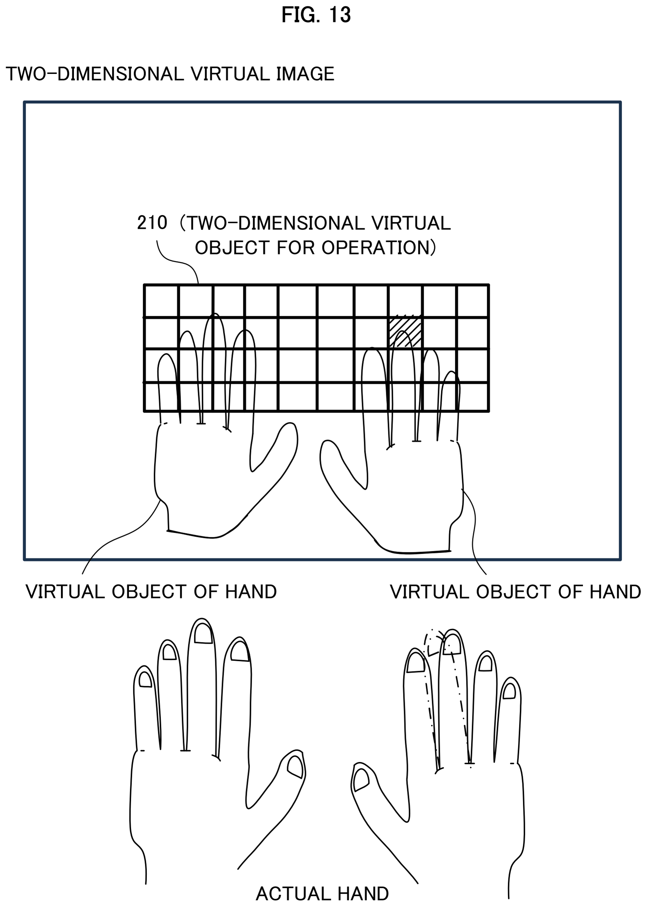

FIGS. 12 and 13 illustrate examples of a virtual object(s) of a hand(s) displayed on the same plane as the virtual object for operation. The display apparatus 1a may in general display an actual outside scene or an image of the outside scene overlaid onto a virtual object for operation (two-dimensional virtual object) and a virtual object of a hand. However, in the examples of FIGS. 12 and 13, the display apparatus 1a displays only the virtual object for operation and the virtual object of the hand. Further, only the keyboard image 210 is illustrated as a virtual object for operation. In FIGS. 12 and 13, as the virtual object of the hand, a two-dimensional virtual object representing a typical hand shape is used. In FIG. 12, the detection unit 72 recognizes only a right hand in the image data, and in response to this, the display control unit 71 controls the display unit 20 to display an image of the right hand as a virtual object of the hand. On the other hand, in FIG. 13, the detection unit 72 recognizes both left and right hands in the image data, and in response to this, the display control unit 71 controls the display unit 20 to display images of both hands as virtual objects of the hands. The display control unit 71 controls display of the virtual object of the hand such that the virtual object of the hand moves on the same plane as the two-dimensional virtual object for operation in response to the motion of the actual hand of the user. This does not allow the virtual object of the hand to move in the depth direction relative to the virtual object for operation, and allows the virtual object of the hand to move only on the same plane as the virtual object for operation. Therefore, the user can move the user's own hand to move a specified part of the virtual object of the hand (e.g., the index finger) accurately and easily to a desired location on the virtual object for operation, for example, to a position on a desired key image of the keyboard image 210.

Further, in the first embodiment, when the information related to details of the specific action is transmitted from the action determination unit 73, the display control unit 71 recognizes the details of the specific action performed by the user, and controls display of the virtual object for operation and/or display of the virtual object of the hand in accordance with the recognized details of the specific action.

Specifically, when the information indicating that a tap (click) action has been performed is transmitted from the action determination unit 73 as the information related to details of the specific action, the display control unit 71 can control display of the virtual object for operation such that a part of the virtual object for operation where a part of the virtual object of the hand corresponding to a finger that performed the tap (click) action is positioned is highlighted. Therefore, for example, in the state where the keyboard image 210 is displayed as an operation screen and the index finger of the right hand in the virtual object of the hand is positioned on a desired key image, when the user performs a tap (click) action (gesture) with the index finger of the user's own right hand, the key image on which the index finger of the virtual object of the hand is positioned is highlighted. In the examples of FIGS. 12 and 13, when the user performs a tap (click) action, the highlighted key image is represented with diagonal lines. Here, in FIG. 12, the user performs a tap (click) action with the index finger of the right hand, and in FIG. 13, the user performs a tap (click) action with the middle finger of the right hand. On the other hand, when information indicating that a tap (click) action has been performed is transmitted from the action determination unit 73 as the information related to the details of the specific action, the display control unit 71 can control display of the virtual object of the hand such that a part of the virtual object of the hand corresponding to a finger that performed the tap (click) action moves in the depth direction relative to the virtual object for operation. For example, when the user performs a tap (click) action (gesture) with the index finger of the user's own right hand, an index finger part in the virtual object of the hand moves in the depth direction. When information indicating that a tap (click) action has been performed is transmitted from the action determination unit 73 as information related to details of a specific action, it is possible to set in advance, on a specified setting screen, which one of the above-described highlighting form and movement displaying in the depth direction is to be performed by the display control unit 71. In the first embodiment, control of the above-described highlighting form is set by default. Note that the present invention is not limited to the above-described highlighting form, and any display form may be used as long as it is different from the default display form.

Further, for example, it is assumed that the keyboard image 210 illustrated in FIGS. 12 and 13 is displayed as a virtual object for operation, and when an index finger part in the virtual object of the hand is positioned on a certain character key image on the keyboard image 210, the user performs a tap (click) action (gesture) with the user's own index finger. In this case, the display control unit 71 obtains in advance the configuration of the keyboard image based on data related to the keyboard image 210 stored in the storage unit 90, and therefore, when information indicating that a tap (click) action has been performed with the index finger is transmitted from the action determination unit 73, the display control unit 71 can identify the character key image on which a part of the virtual object of the hand corresponding to the index finger that performed the tap (click) action is positioned. Then, the display control unit 71 recognizes an instruction to input a character corresponding to the identified character key image, and displays the character indicated by the instruction to input in a predetermined location on the virtual object for operation (e.g., the display area 220). Note that, in cases where the virtual object for operation does not have the display area 220, the character indicated by the instruction to input may be displayed on a virtual image other than the virtual object for operation.

Furthermore, when information indicating that a scroll action has been performed is transmitted from the action determination unit 73, the display control unit 71 recognizes that the user has performed a scroll action, and displays the virtual object for operation to be moved up and down or left and right in accordance with the recognized scroll action instruction. When information indicating that a pinch-in action has been performed is transmitted from the action determination unit 73, the display control unit 71 recognizes that the user has performed a pinch-in action, and reduces the virtual object for operation to be displayed in accordance with the recognized pinch-in action instruction. Then, when information indicating that a pinch-out action has been performed is transmitted from the action determination unit 73, the display control unit 71 recognizes that the user has performed a pinch-out action, and enlarges the virtual object for operation to be displayed in accordance with the recognized pinch-out action instruction.

The communication unit 80 communicates information with external devices. The storage unit 90 stores various programs, data, and the like. The programs stored in the storage unit 90 include programs for causing components of the display control unit 71, the detection unit 72, and the action determination unit 73 to implement the above-described processing functions. On the other hand, the data stored in the storage unit 90 includes, for example, image data of an original image corresponding to a virtual image (including a virtual object for operation, a virtual object of a hand, etc.), and data related to the virtual object for operation, the virtual object of the hand, and so on. Specifically, the data related to the virtual object for operation is data indicating the size, shape, content, configuration, and so on of the virtual object for operation, and the data related to the virtual object of the hand is data indicating the size, shape, configuration, and so on of the virtual object of the hand. Note that such programs and data may be stored in an external server device, and the control unit 70 may access the server device via the communication unit 80 to acquire the programs and data.

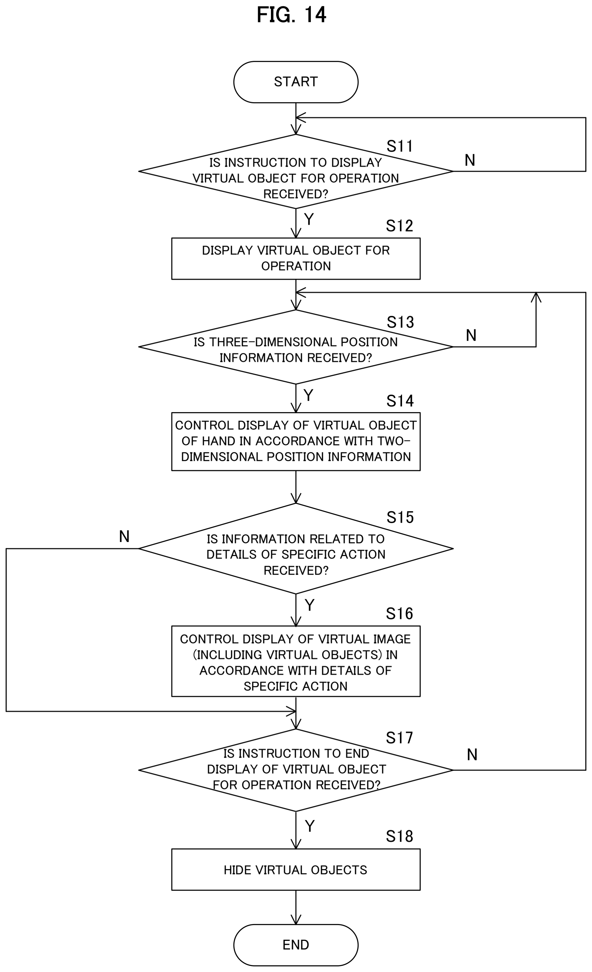

Next, a display process of a virtual object for operation and a virtual object of a hand, performed by the display control unit 71 in the display apparatus 1a according to the first embodiment will be described. FIG. 14 is a flowchart of the procedure for the display process of a virtual object for operation and a virtual object of a hand, performed by the display control unit 71 in the display apparatus 1a according to the first embodiment.

The user issues an instruction to display a desired virtual object for operation (two-dimensional virtual object) by voice from the microphone unit 50, by an operation on the touch pad unit 40, or the like. In response to receiving the instruction, the display control unit 71 of the control unit 70 performs the process according to the processing flow of FIG. 14. Specifically, in response to receiving the instruction to display a virtual object for operation (S11), the display control unit 71 reads out image data of an original image corresponding to the virtual object for operation indicated by the instruction and data related to that virtual object for operation from the storage unit 90, and displays the original image corresponding to the virtual object for operation on the half mirror of the display unit 20 (S12). This allows the user to see the virtual object for operation on the right side of the user's own field of view as if it is floating in a space.

Next, the control unit 70 transmits an instruction to start image capturing to the imaging unit 30 , and controls the image capturing operation by the imaging unit 30. As a result, the imaging unit 30 captures an image of a wide area including an area in front of the user, and the resulting image data thus captured is transmitted to the control unit 70. Here, the image data obtained by the imaging unit 30 includes the hand(s) of the user. At that time, the camera unit 31 of the imaging unit 30 measures the distance to the hand of the user, and distance data of the measured distance is also transmitted to the control unit 70. The detection unit 72 of the control unit 70 uses the image data and the distance data to generate three-dimensional position information about the hand at regular time intervals as information related to the motion of the hand of the user, and outputs that information to the action determination unit 73 and the display control unit 71 each time the information is generated. Here, the three-dimensional position information is composed of two-dimensional position information (XY coordinate information) for identifying the hand on a plane perpendicular to the optical axis of the camera unit 31, and one-dimensional position information (Z coordinate information) for identifying the hand in the optical axis direction of the camera unit 31. Furthermore, the time interval at which the detection unit 72 generates the three-dimensional position information is very short.

In response to receiving the three-dimensional position information as information related to the motion of the hand from the detection unit 72 (S13), the display control unit 71 determines the display position of the virtual object of the hand on a plane including the virtual object for operation, based on the two-dimensional position information (XY coordinate information) for identifying the hand on a plane perpendicular to the optical axis of the camera unit 31, from the transmitted three-dimensional position information, and controls display of the virtual object of the hand so that the virtual object of the hand is located at the determined position (S14). Such display control of the virtual object of the hand being performed each time three-dimensional position information is transmitted from the detection unit 72 allows the user to see the virtual object of the hand moving on the same plane as the two-dimensional virtual object for operation in response to the actual motion of the user's own hand. This does not allow the virtual object of the hand to move in the depth direction relative to the virtual object for operation, and allows the virtual object of the hand to move only on the same plane as the virtual object for operation. Thus, the user can move the user's own hand to move the virtual object of the hand accurately and easily to a desired location on the virtual object for operation.

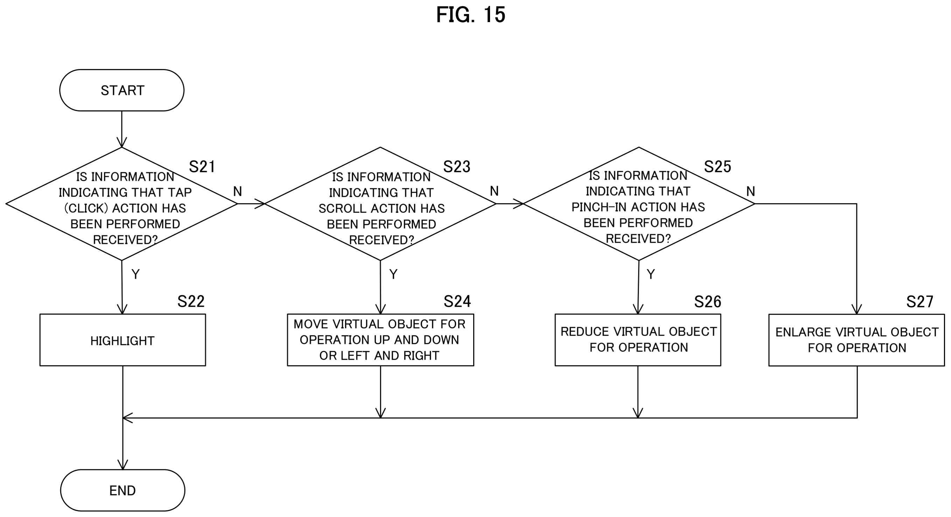

On the other hand, in response to receiving the three-dimensional position information as information relating to the motion of the hand transmitted from the detection unit 72, the action determination unit 73 determines, based on the transmitted three-dimensional position information, whether or not the user has performed, using the finger(s) of the user's own hand, one of the specific actions (gestures) including a tap (click) action, a scroll action, a pinch-in action, and a pinch-out action. Then, when the action determination unit 75 determines that one of the specific actions has been performed, the action determination unit 75 outputs information related to the details of the specific action to the display control unit 71. In response to receiving the information related to the details of the specific action from the action determination unit 73 (S15), the display control unit 71 recognizes the details of the specific action performed by the user based on the transmitted information related to the details of the specific action, and controls display of the virtual image, in particular display of the virtual object for operation and/or the virtual object of the hand, in accordance with the recognized details of the specific action (S16). The content of the display process in step S16 is illustrated in FIG. 15. Note that, when the display control unit 71 determines in step S15 that it has not received the information related to the details of the specific action from the action determination unit 73, the process proceeds to step S17.

FIG. 15 is a flowchart of the processing procedure for display control of a virtual image (including virtual objects) described in step S16 in the processing flow of FIG. 14. In describing the processing flow of FIG. 15, it is assumed that four specific actions are defined in advance: a tap (click) action, a scroll action, a pinch-in action, and a pinch-out action.

When the display control unit 71 determines that information indicating that a tap (click) action has been performed has been transmitted from the action determination unit 73 (S21), the display control unit 71 highlights a part of the virtual object for operation where a part of the virtual object of the hand corresponding to a finger that performed the tap (click) action is positioned (S22). In particular, in the state where a virtual object of a hand is displayed on the keyboard image 210 serving as a virtual object for operation, the display control unit 71 highlights a key image where a finger part of the virtual object of the hand corresponding to a finger that performed the tap (click) action is positioned, as illustrated in FIG. 12 or 13, also recognizes that an instruction has been issued to input a character represented by that key image, and displays that character, for example, in the display area 220 of the character input screen 200. After that, the process according to the processing flow of FIG. 15 ends. On the other hand, if the determination in step S21 is negative, the process proceeds to step S23.

In step S23, the display control unit 71 determines whether or not information indicating that a scroll action has been performed has been transmitted from the action determination unit 73 as information related to the specific action. When the display control unit 71 determines that information indicating that a scroll action has been performed has been transmitted, the display control unit 71 controls display of the virtual object for operation so that the currently displayed virtual object for operation moves up and down or left and right (S24). After that, the process according to the processing flow of FIG. 15 ends. On the other hand, if the determination in step S23 is negative, the process proceeds to step S25.

In step S25, the display control unit 71 determines whether or not information indicating that a pinch-in action has been performed has been transmitted from the action determination unit 73 as information related to the specific action. When the display control unit 71 determines that information indicating that a pinch-in action has been performed has been transmitted, the display control unit 71 controls display of the virtual object for operation so that the currently displayed virtual object for operation is reduced (S26). After that, the process according to the processing flow of FIG. 15 ends. On the other hand, if the determination in step S25 is negative, which results in negative determinations all in steps S21, S23, and S25, then the display control unit 71 determines that information indicating that a pinch-out action has been performed has been transmitted from the action determination unit 73 as information related to the specific action. Accordingly, the display control unit 71 controls display of the virtual object for operation so that the currently displayed virtual object for operation is enlarged (S27). After that, the process according to the processing flow of FIG. 15 ends. When the display control of the virtual image (including virtual objects) in step S16 thus ends, the process proceeds to step S17 in FIG. 14.

In step S17 in FIG. 14, the display control unit 71 of the control unit 70 determines whether or not an instruction to end the display of the virtual object for operation has been received. The user can issue an instruction to end the display of the virtual object for operation by voice from the microphone unit 50 or by an operation on the touch pad unit 40. In response to receiving the instruction to end the display of the virtual object for operation, the display control unit 71 hides the virtual object for operation and the virtual object of the hand (S18). Further, the control unit 70 transmits an instruction to the imaging unit 30 to end the image capturing operation. This ends the display process of the virtual object for operation and the virtual object of the hand illustrated in FIG. 14. On the other hand, when the display control unit 71 determines in step S17 that it has not received an instruction to end the display of the virtual object for operation, the process proceeds to step S13.

In the display apparatus according to the first embodiment, the display control unit controls display of the virtual object of the hand such that the virtual object of the hand moves on the same plane as the two-dimensional virtual object for operation in response to the motion of the hand of the user. This does not allow the virtual object of the hand to move in the depth direction relative to the virtual object for operation, and allows the virtual object of the hand to move only on the same plane as the virtual object for operation. Thus, the user can move the user's own hand to move the virtual object of the hand accurately and easily to a desired location on the virtual object for operation. Therefore, as compared to the conventional devices in which the user operates a keyboard (virtual object for operation) displayed appearing as if it is floating in a space with the user's own hand, the display apparatus according to the first embodiment can be used to enable accurate and easy operation on the virtual object for operation.

### Second Embodiment

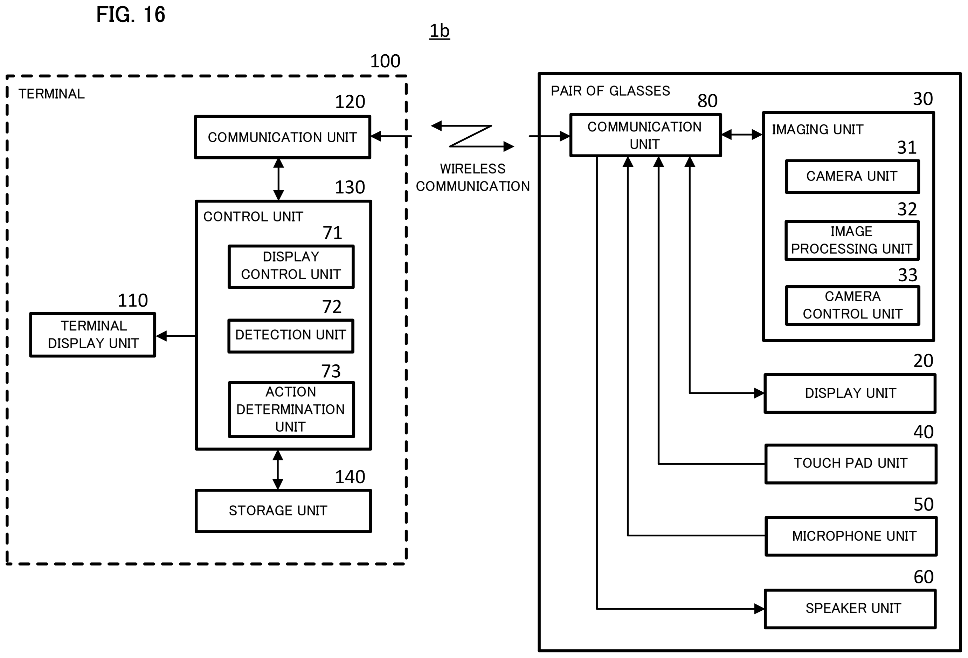

Next, a display apparatus according to a second embodiment of the present invention will be described. FIG. 16 is a schematic block diagram of the display apparatus according to the second embodiment of the present invention. Note that, in the second embodiment, the components having the same functions as those of the first embodiment described above are designated by the same reference numerals, and detailed description thereof will be omitted.

A display apparatus 1b according to the second embodiment is configured to allow a user to see a virtual image, and includes, as illustrated in FIG. 16, a pair of glasses 10 serving as a wearable object to be worn on the head of the user, a display unit 20 configured to display an original image of the virtual image, an imaging unit 30 configured to capture an image of an area in front of the user, a touch pad unit 40, a microphone unit 50, a speaker unit 60, a communication unit 80, and a terminal 100. The display unit 20, the imaging unit 30, the touch pad unit 40, the microphone unit 50, the speaker unit 60, and the communication unit 80 are provided on the pair of glasses 10. On the other hand, the terminal 100 is configured separately from the pair of glasses 10. In order to simplify the description of the terminal 100, parts which are closely related to the present invention will be described in detail, and the description of the other parts will be omitted.

The communication unit 80 is for performing wireless communication between the terminal 100 and the various units (display unit 20, imaging unit 30, touch pad unit 40, microphone unit 50, and speaker unit 60) provided on the pair of glasses 10. The display unit 20, the imaging unit 30, the touch pad unit 40, the microphone unit 50, and the speaker unit 60 are controlled by the terminal 100 through wireless communication. Accordingly, in the second embodiment, unlike the first embodiment, the pair of glasses 10 does not include a control unit and the like for controlling the display unit 20.

This display apparatus 1b according to the second embodiment mainly differs from the display apparatus 1a according to the first embodiment in that the display apparatus 1b includes the terminal 100 configured separately from the pair of glasses 10, and that the terminal 100 controls the display unit 20, the imaging unit 30, the touch pad unit 40, the microphone unit 50, and the speaker unit 60. The other configurations of the display apparatus 1b according to the second embodiment are the same as those of the display apparatus 1a according to the first embodiment.

In the second embodiment, the terminal 100 controls the display unit 20, the imaging unit 30, the touch pad unit 40, the microphone unit 50, and the speaker unit 60. The terminal 100 as used herein is an existing terminal such as a smartphone or a tablet terminal. As illustrated in FIG. 16, the terminal 100 includes a terminal display unit 110, a communication unit 120, a control unit 130, and a storage unit 140. The terminal display unit 110 is a liquid crystal display provided on the surface of the terminal 100. Further, a touch panel is provided on the screen of the terminal display unit 110. On the screen of the terminal display unit 110, various screens are displayed such as a home screen, a menu screen, an application screen, and a character input screen. By performing a touch operation on such screens, the user can issue various instructions to the terminal 100. The terminal 100 is not limited to an existing terminal such as a smartphone or a tablet terminal, and a dedicated terminal may be used. In this case, the dedicated terminal may not include a terminal display unit.

Further, the terminal 100 has a function that performs wireless communication with external devices. This function is implemented in the communication unit 120. Of course, the terminal 100 can perform wireless communication with the display unit 20, the imaging unit 30, and the like via this communication unit 120 and the communication unit 80 provided on the pair of glasses 10. In this respect, the terminal 100 is wirelessly connected to the display unit 20, the imaging unit 30, and so on. Here, examples of a method to be used of wireless communication between the terminal 100 and the display unit 20, the imaging unit 30, and so on include Bluetooth (registered trademark).

The control unit 130 includes a central processing unit (CPU) and the like to control the entire terminal 100 and also control the display unit 20, the imaging unit 30, the touch pad unit 40, the microphone unit 50, and the speaker unit 60. In other words, the control unit 130 has the same functions as the control unit 70 in the display apparatus 1a according to the first embodiment, and includes, as illustrated in FIG. 16, a display control unit 71, a detection unit 72, and an action determination unit 73. Further, the storage unit 140 of the terminal 100 stores various programs, data, and the like. Such programs and data include the programs and data stored in the storage unit 90 of the display apparatus 1a according to the first embodiment.

The display apparatus according to the second embodiment has the same advantageous effects as the first embodiment. Specifically, the display apparatus according to the second embodiment can be used to allow the user to move the user's own hand to move the virtual object of the hand accurately and easily to a desired location in the two-dimensional virtual object for operation. Therefore, as compared to the conventional devices in which the user operates, for example, a keyboard (virtual object for operation) displayed appearing as if it is floating in a space with the user's own hand, the display apparatus according to the second embodiment can be used to enable accurate and easy operation on the virtual object for operation.

In particular, in the display apparatus according to the second embodiment, the terminal having the control unit to control the components provided on the pair of glasses, such as the display unit and the imaging unit, is configured separately from the pair of glasses. Therefore, as the terminal, for example, an existing terminal such as a smartphone, a tablet terminal, or the like can be used. Such a use of an existing terminal or the like as the terminal makes it possible to reduce the number of parts of the pair of glasses, resulting in a simplified configuration of a pair of glasses. Note that, as the terminal, a dedicated terminal may be used. In that case, the dedicated terminal may not include a terminal display unit.

### Third Embodiment

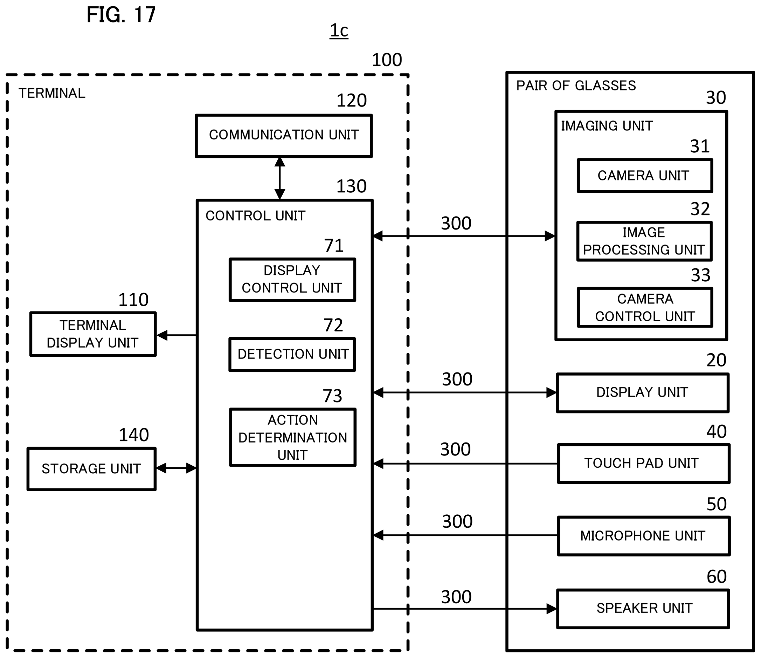

Next, a display apparatus according to a third embodiment of the present invention will be described. FIG. 17 is a schematic block diagram of the display apparatus according to the third embodiment of the present invention. Note that, in the third embodiment, the components having the same functions as those of the second embodiment described above are designated by the same reference numerals, and detailed description thereof will be omitted.

A display apparatus 1c according to the third embodiment is configured to allow a user to see a virtual image, and includes, as illustrated in FIG. 17, a pair of glasses 10 serving as a wearable object to be worn on the head of the user, a display unit 20 configured to display an original image of the virtual image, an imaging unit 30 configured to capture an image of an area in front of the user, a touch pad unit 40, a microphone unit 50, a speaker unit 60, a terminal 100, and a cable 300 that connects between the pair of glasses 10 and the terminal 100. The display unit 20, the imaging unit 30, the touch pad unit 40, the microphone unit 50, and the speaker unit 60 are provided on the pair of glasses 10. On the other hand, the terminal 100 is configured separately from the pair of glasses 10. In order to simplify the description of the terminal 100, parts which are closely related to the present invention will be described in detail, and the description of the other parts will be omitted.

A connection terminal (not illustrated) for connecting the cable 300 is provided at a predetermined location on the pair of glasses 10. In the third embodiment, the display unit 20, the imaging unit 30, the touch pad unit 40, the microphone unit 50, and the speaker unit 60 are controlled by the terminal 100 through wired communication using the cable 300. Accordingly, in the third embodiment, unlike the first embodiment, the pair of glasses 10 does not include a control unit and the like for controlling the display unit 20.

The display apparatus 1c according to the third embodiment mainly differs from the display apparatus 1b according to the second embodiment in that the pair of glasses 10 and the terminal 100 are connected by wire using the cable 300. The other configurations of the display apparatus 1c according to the third embodiment are the same as those of the display apparatus 1b according to the second embodiment.

As illustrated in FIG. 17, the terminal 100 includes a terminal display unit 110, a communication unit 120, a control unit 130, a storage unit 140, and a connection terminal (not illustrated) serving as an interface. The cable 300 is connected to the connection terminal of the terminal 100. The pair of glasses 10 and the terminal 100 are connected by the cable 300, and the terminal 100 can communicate with the display unit 20, the imaging unit 30, the touch pad unit 40, the microphone unit 50, and the speaker unit 60 via the cable 300. For example, an HDMI (registered trademark) terminal may be used as the connection terminal of the terminal 100 and the connection terminal provided in the pair of glasses 10, and an HDMI (registered trademark) cable may be used as the cable 300.

The control unit 130 includes a central processing unit (CPU) and the like to control the entire terminal 100 and also control the display unit 20, the imaging unit 30, the touch pad unit 40, the microphone unit 50, and the speaker unit 60. In other words, the control unit 130 has the same functions as the control unit 70 in the display apparatus 1a according to the first embodiment, and includes, as illustrated in FIG. 17, a display control unit 71, a detection unit 72, and an action determination unit 73. Further, the storage unit 140 of the terminal 100 stores various programs, data, and the like. Such programs and data include the programs and data stored in the storage unit 90 of the display apparatus 1a according to the first embodiment.

The display apparatus according to the third embodiment has the same advantageous effects as the second embodiment. Specifically, the display apparatus according to the third embodiment can be used to allow the user to move the user's own hand to move the virtual object of the hand easily to a desired location in the two-dimensional virtual object for operation. Therefore, as compared to the conventional devices in which the user operates, for example, a keyboard (virtual object for operation) displayed appearing as if it is floating in a space with the user's own hand, the display apparatus according to the third embodiment can be used to enable accurate and easy operation on the virtual object for operation. In addition, the terminal having the control unit to control the components provided on the pair of glasses, such as the display unit and the imaging unit, is configured separately from the pair of glasses. Therefore, as the terminal, for example, an existing terminal such as a smartphone or a tablet terminal can be used, so that it is possible to reduce the number of parts of the pair of glasses, resulting in a simplified configuration of a pair of glasses. Note that, as the terminal, a dedicated terminal may be used. In that case, the dedicated terminal may not include a terminal display unit.

### Fourth Embodiment

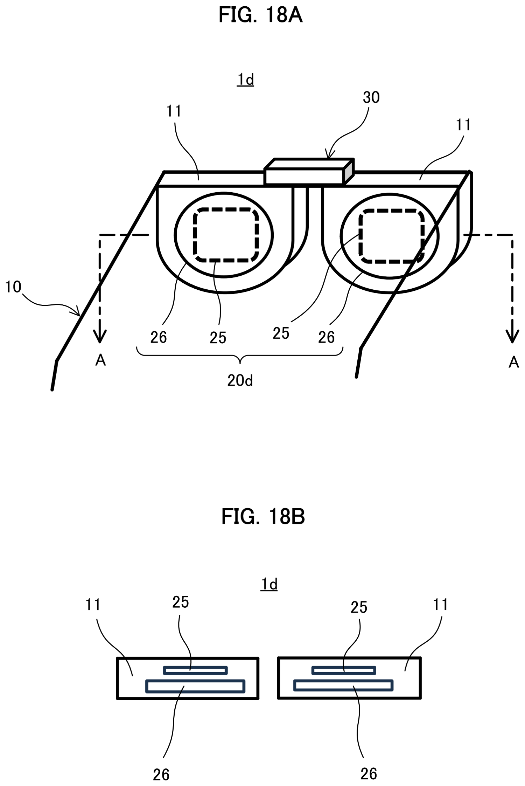

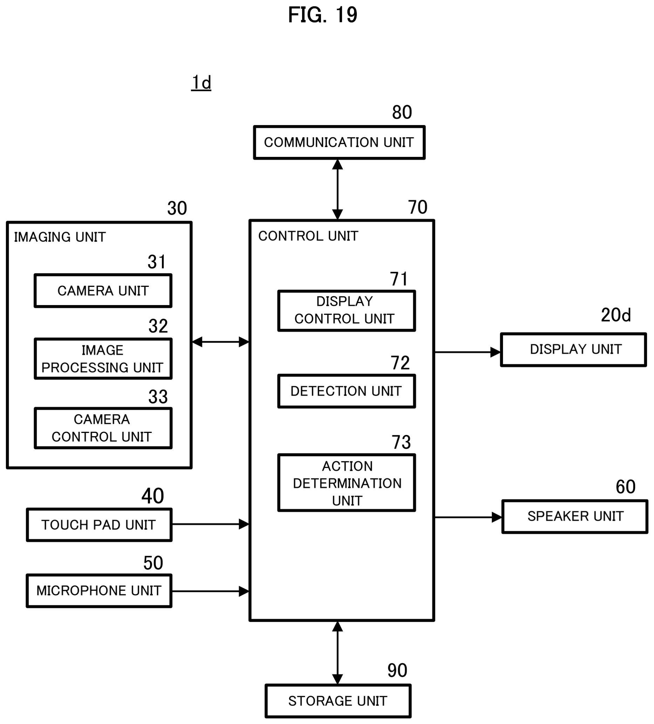

Next, a display apparatus according to a fourth embodiment of the present invention will be described. FIG. 18A is a schematic perspective view of the display apparatus according to the fourth embodiment of the present invention, and FIG. 18B is a schematic cross-sectional view of the display apparatus taken in directions of arrows A-A. Further, FIG. 19 is a schematic block diagram of the display apparatus according to the fourth embodiment. Note that, in the fourth embodiment, the components having the same functions as those of the first embodiment described above are designated by the same reference numerals, and detailed description thereof will be omitted.

In the fourth embodiment, a case will be described in which the display apparatus of the present invention is applied to a glasses-type terminal that is worn on the head of a user like a pair of glasses. A display apparatus 1d according to the fourth embodiment is hardware for MR or VR that is configured to allow a user to see a virtual image, and includes, as illustrated in FIGS. 18 and 19, a pair of glasses 10 serving as a wearable object to be worn on the head of the user, a display unit 20d configured to display an original image of the virtual image, an imaging unit 30 configured to capture an image of an area in front of the user, a touch pad unit 40, a microphone unit 50, a speaker unit 60, a control unit 70, a communication unit 80, and a storage unit 90. The display unit 20d, the imaging unit 30, the touch pad unit 40, the microphone unit 50, the speaker unit 60, the control unit 70, the communication unit 80, and the storage unit 90 are provided on the pair of glasses 10. Note that, in FIG. 18B, the imaging unit 30 and the temple portions of the pair of glasses 10 are not illustrated.

The display apparatus 1d according to the fourth embodiment differs from the display apparatus 1a according to the first embodiment in the configuration of the display unit 20d. The other configurations of the display apparatus 1d according to the fourth embodiment are the same as those of the display apparatus 1a according to the first embodiment.

As illustrated in FIG. 18, the display unit 20d is built into the left and right lens parts 11, 11 of the pair of glasses 10, and includes display devices 25, 25, and lenses 26, 26 serving as an optical system. In each lens part 11, the display device 25 is disposed on the outside, and the lens 26 is disposed on the inside. The display device 25 to be used includes a liquid crystal panel, an organic EL panel, an inorganic EL panel, a micro display, and the like. The micro display is an extremely small display device capable of displaying clear images with high resolution. The micro display includes a micro LED display, a micro OLED display using organic electroluminescence (EL) technology, and the like. In the fourth embodiment, the display device 25 is disposed on each of the left and right lens parts 11. These left and right display devices 25, 25 can display different images or videos from each other. In particular, for example, by displaying an image for the left eye on the left display device 25 and an image for the right eye on the right display device 25, the display apparatus 1d can display a three-dimensional virtual image to be stereoscopically seen by the user.

The display device 25 displays an image or video representing the outside scene (external environment) or VR, and an image or video (original image) corresponding to a two-dimensional virtual image (a virtual object for operation, a virtual object of a hand, etc.). The display device 25 can also overlay an original image corresponding to a virtual image onto an image or video representing the outside scene (external environment) or VR to display.

The control unit 70 includes a central processing unit (CPU) and the like, and controls the entire display apparatus 1d according to the fourth embodiment. Specifically, the control unit 70 controls the display unit 20d to control display of the virtual image (including virtual objects), and controls the imaging unit 30 to capture an image. Specifically, as illustrated in FIG. 19, the control unit 70 includes a display control unit 71, a detection unit 72, and an action determination unit 73. The display control unit 71 controls the display unit 20d to control display of various virtual images including virtual objects for operation. When the display control unit 71 controls the display device 25 of the display unit 20d to project an original image corresponding to the virtual image (including virtual objects) onto the display device 25, the user can see the original image projected onto the display device 25 through the lens 26 and recognize the virtual image, which appears as if it is floating in a space. Further, in a state of the display unit 20d displaying a two-dimensional virtual object for operation, the display control unit 71 controls, based on the information related to the motion of the hand transmitted from the detection unit 72, display of the virtual object of the hand such that the virtual object of the hand moves on the same plane as the virtual object for operation in response to the motion of the hand of the user. Further, the display control unit 71 can also control the display unit 20d to control display of an image or video representing the outside scene (external environment) or VR.

The display apparatus according to the fourth embodiment has the same advantageous effects as the first embodiment. Specifically, the display apparatus according to the fourth embodiment can be used to allow the user to move the user's own hand to move the virtual object of the hand accurately and easily to a desired location in the two-dimensional virtual object for operation. Therefore, as compared to the conventional devices in which the user operates, for example, a keyboard displayed appearing as if it is floating in a space with the user's own hand, the display apparatus according to the fourth embodiment can be used to enable accurate and easy operation on the virtual object for operation.

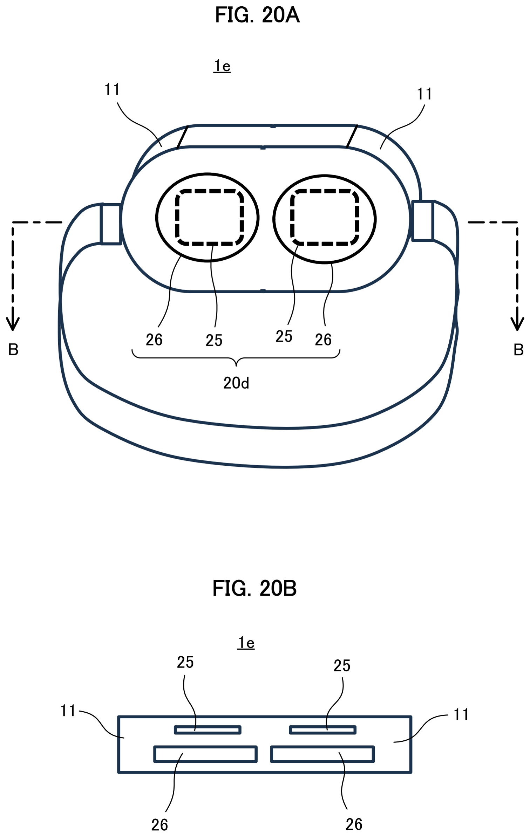

Note that, in the above fourth embodiment, a case has been described in which a pair of glasses is used as a wearable object to be worn on the head of the user; however, a head-mounted display (HMD) may be used instead of the pair of glasses. Specifically, the display apparatus of the present invention may be applied to a head-mounted display (HMD) terminal. FIG. 20A is a schematic perspective view of a display apparatus according to a modification example of the fourth embodiment, and FIG. 20B is a schematic cross-sectional view of the display apparatus taken in directions of arrows B-B. A display apparatus 1e according to the modification example of the fourth embodiment, is a head-mounted display (HMD) terminal configured to allow a user to see a virtual image (including virtual objects). In this display apparatus 1e as well, similarly to the fourth embodiment, a display unit 20d is built into lens parts 11, 11 of goggles, and includes display devices 25, 25, and lenses 26, 26 serving as an optical system. Note that, in the display apparatus 1e according to the modification example of the fourth embodiment, an imaging unit 30 is attached to the front of the goggles, but the imaging unit 30 is not illustrated in FIGS. 20A and 20B. In addition, in FIG. 20B, a band part of the goggles is not illustrated. Furthermore, the display devices 25, 25 display an image or video representing the outside scene (external environment) or VR, and an image or video (original image) corresponding to a two-dimensional virtual image (including a virtual object for operation, a virtual object of a hand, etc.). The display devices 25, 25 can also overlay an original image corresponding to a virtual image onto an image or video representing the outside scene (external environment) or VR to display.

### Fifth Embodiment

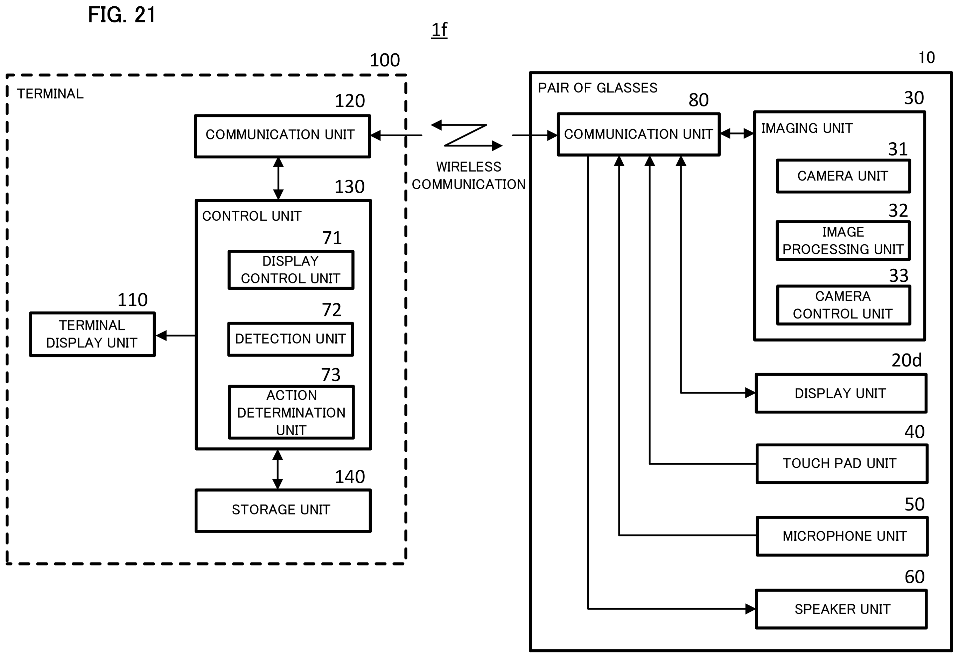

Next, a display apparatus according to a fifth embodiment of the present invention will be described. FIG. 21 is a schematic block diagram of the display apparatus according to the fifth embodiment of the present invention. Note that, in the fifth embodiment, the components having the same functions as those of the fourth embodiment described above are designated by the same reference numerals, and detailed description thereof will be omitted.

A display apparatus 1f according to the fifth embodiment is configured to allow a user to see a virtual image, and includes, as illustrated in FIG. 21, a pair of glasses 10 serving as a wearable object to be worn on the head of the user, a display unit 20d configured to display an original image of the virtual image, an imaging unit 30 configured to capture an image of an area in front of the user, a touch pad unit 40, a microphone unit 50, a speaker unit 60, a communication unit 80, and a terminal 100. The display unit 20d, the imaging unit 30, the touch pad unit 40, the microphone unit 50, the speaker unit 60, and the communication unit 80 are provided on the pair of glasses 10. On the other hand, the terminal 100 is configured separately from the pair of glasses 10.

The communication unit 80 is for performing wireless communication between the terminal 100 and the various units (display unit 20d, imaging unit 30, touch pad unit 40, microphone unit 50, and speaker unit 60) provided on the pair of glasses 10. The display unit 20d, the imaging unit 30, the touch pad unit 40, the microphone unit 50, and the speaker unit 60 are controlled by the terminal 100 through wireless communication.

This display apparatus 1f according to the fifth embodiment mainly differs from the display apparatus 1e according to the fourth embodiment in that the display apparatus 1f includes the terminal 100 configured separately from the pair of glasses 10, and that the terminal 100 controls the display unit 20d, the imaging unit 30, the touch pad unit 40, the microphone unit 50, and the speaker unit 60. The other configurations of the display apparatus 1f according to the fifth embodiment are the same as those of the display apparatus 1e according to the fourth embodiment.

As illustrated in FIG. 21, the terminal 100 includes a terminal display unit 110, a communication unit 120, a control unit 130, and a storage unit 140. The terminal 100 has a function that performs wireless communication with external devices. This function is implemented in the communication unit 120.

The control unit 130 includes a central processing unit (CPU) and the like to control the entire terminal 100 and also control the display unit 20d, the imaging unit 30, the touch pad unit 40, the microphone unit 50, and the speaker unit 60. Specifically, the control unit 130 includes a display control unit 71, a detection unit 72, and an action determination unit 73.

The display apparatus according to the fifth embodiment has the same advantageous effects as the fourth embodiment. Specifically, the display apparatus according to the fifth embodiment can be used to allow the user to move the user's own hand to move the virtual object of the hand accurately and easily to a desired location in the two-dimensional virtual object for operation. Therefore, as compared to the conventional devices in which the user operates, for example, a keyboard (virtual object for operation) displayed appearing as if it is floating in a space with the user's own hand, the display apparatus according to the fifth embodiment can be used to enable accurate and easy operation on the virtual object for operation.

In particular, in the display apparatus according to the fifth embodiment, the terminal having the control unit to control the components provided on the pair of glasses, such as the display unit and the imaging unit, is configured separately from the pair of glasses. Therefore, as the terminal, for example, an existing terminal such as a smartphone or a tablet terminal can be used. Such a use of an existing terminal or the like as the terminal makes it possible to reduce the number of parts of the pair of glasses, resulting in a simplified configuration of a pair of glasses. Note that, as the terminal, a dedicated terminal may be used. In that case, the dedicated terminal may not include a terminal display unit. Further, as in the modification example of the fourth embodiment, the pair of glasses serving as a wearable object may be an HMD terminal.

### Sixth Embodiment

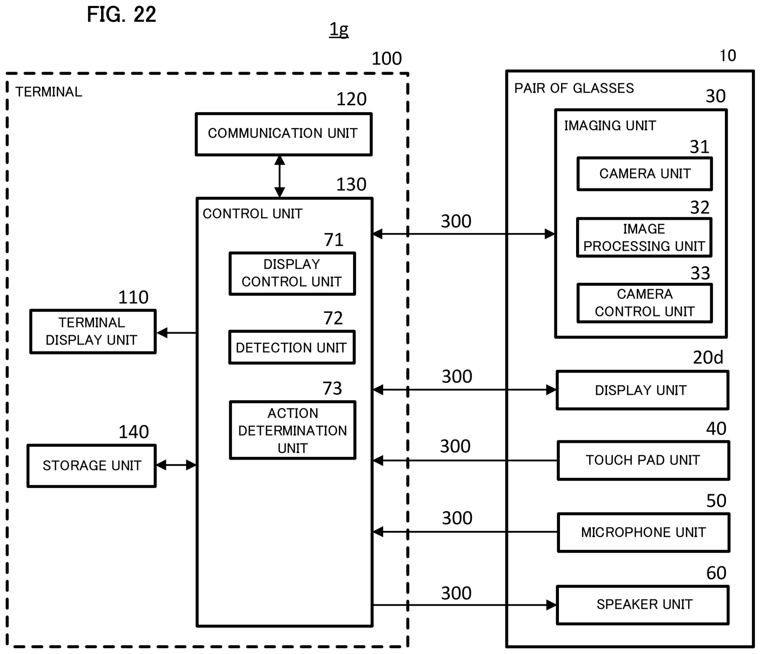

Next, a display apparatus according to a sixth embodiment of the present invention will be described. FIG. 22 is a schematic block diagram of the display apparatus according to the sixth embodiment of the present invention. Note that, in the sixth embodiment, the components having the same functions as those of the fifth embodiment described above are designated by the same reference numerals, and detailed description thereof will be omitted.

A display apparatus 1g according to the sixth embodiment is configured to allow a user to see a virtual image, and includes, as illustrated in FIG. 22, a pair of glasses 10 serving as a wearable object to be worn on the head of the user, a display unit 20d configured to display an original image of the virtual image, an imaging unit 30 configured to capture an image of an area in front of the user, a touch pad unit 40, a microphone unit 50, a speaker unit 60, a terminal 100, and a cable 300 that connects between the pair of glasses 10 and the terminal 100. The display unit 20d, the imaging unit 30, the touch pad unit 40, the microphone unit 50, and the speaker unit 60 are provided on the pair of glasses 10. On the other hand, the terminal 100 is configured separately from the pair of glasses 10.

A connection terminal (not illustrated) for connecting the cable 300 is provided at a predetermined location on the pair of glasses 10. In the sixth embodiment, the display unit 20d, the imaging unit 30, the touch pad unit 40, the microphone unit 50, and the speaker unit 60 are controlled by the terminal 100 through wired communication using the cable 300.

The display apparatus 1g according to the sixth embodiment mainly differs from the display apparatus 1f according to the fifth embodiment in that the pair of glasses 10 and the terminal 100 are connected by wire using the cable 300. The other configurations of the display apparatus 1g according to the sixth embodiment are the same as those of the display apparatus 1f according to the fifth embodiment.

As illustrated in FIG. 22, the terminal 100 includes a terminal display unit 110, a communication unit 120, a control unit 130, a storage unit 140, and a connection terminal (not illustrated) serving as an interface. The cable 300 is connected to the connection terminal of the terminal 100. The pair of glasses 10 and the terminal 100 are connected by the cable 300, and the terminal 100 can communicate with the display unit 20d, the imaging unit 30, the touch pad unit 40, the microphone unit 50, and the speaker unit 60 via the cable 300.

The control unit 130 includes a central processing unit (CPU) and the like to control the entire terminal 100 and also control the display unit 20d, the imaging unit 30, the touch pad unit 40, the microphone unit 50, and the speaker unit 60. Specifically, the control unit 130 includes a display control unit 71, a detection unit 72, and an action determination unit 73.

The display apparatus according to the sixth embodiment has the same advantageous effects as the fifth embodiment. Specifically, the display apparatus according to the sixth embodiment can be used to allow the user to move the user's own hand to move the virtual object of the hand easily to a desired location in the two-dimensional virtual object for operation. Therefore, as compared to the conventional devices in which the user operates, for example, a keyboard (virtual object for operation) displayed appearing as if it is floating in a space with the user's own hand, the display apparatus according to the sixth embodiment can be used to enable accurate and easy operation on the virtual object for operation. In addition, the terminal having the control unit to control the components provided on the pair of glasses, such as the display unit and the imaging unit, is configured separately from the pair of glasses. Therefore, as the terminal, for example, an existing terminal such as a smartphone or a tablet terminal can be used, so that it is possible to reduce the number of parts of the pair of glasses, resulting in a simplified configuration of a pair of glasses. Note that, as the terminal, a dedicated terminal may be used. In that case, the dedicated terminal may not include a terminal display unit. Further, as in the modification example of the fourth embodiment, the pair of glasses serving as a wearable object may be an HMD terminal.

### Seventh Embodiment

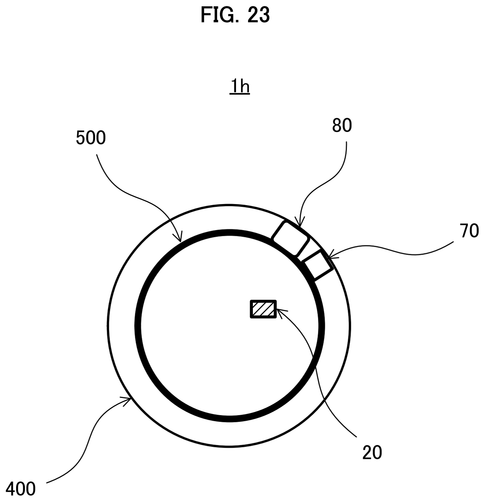

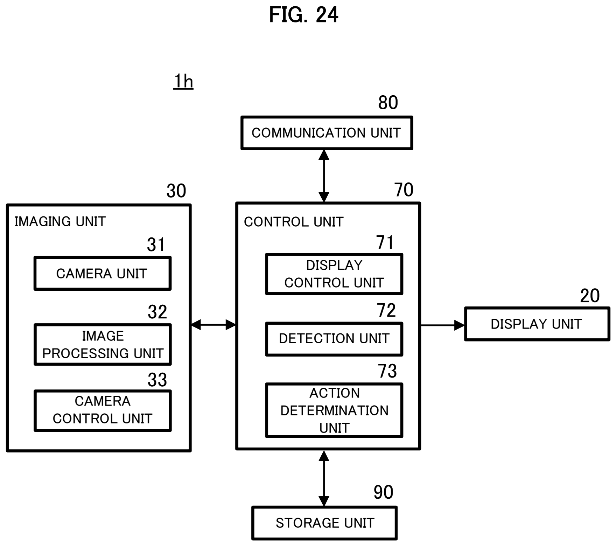

Next, a display apparatus according to a seventh embodiment of the present invention will be described. FIG. 23 is a schematic front view of the display apparatus according to the seventh embodiment of the present invention, and FIG. 24 is a schematic block diagram of the display apparatus according to the seventh embodiment. Note that, in the seventh embodiment, the components having the same functions as those of each of the first to third embodiments described above are designated by the same reference numerals, and detailed description thereof will be omitted.

In the seventh embodiment, a case will be described in which the display apparatus of the present invention is applied to a so-called smart contact lens for display, which is to be worn by an eye of a user to use. A display apparatus 1h according to the seventh embodiment is configured to allow a user to see a virtual image, and includes, as illustrated in FIGS. 23 and 24, a contact lens 400 to be worn on an eye of the user, a display unit 20 configured to display an original image of the virtual image, an imaging unit 30 configured to capture an image of an area in front of the user, a control unit 70, a communication unit 80, a storage unit 90, and an antenna unit 500. Here, since the head includes the eyes, the contact lens 400 can be considered as a type of wearable object to be worn on the head of the user. In the seventh embodiment, the display unit 20, the imaging unit 30, the control unit 70, the communication unit 80, the storage unit 90, and the antenna unit 500 are all provided on the contact lens 400. Note that, in FIG. 23, the imaging unit 30 and the storage unit 90 are not illustrated.

As illustrated in FIG. 23, the display unit 20 is provided in an approximately central portion of the contact lens 400. This display unit 20 includes a micro projector, an optical system, and a half mirror. Examples of the optical system to be used include a lens and a waveguide. The half mirror serves as a projection unit onto which an image or video displayed on the micro projector is projected via the optical system. Onto the half mirror of the display unit 20, normal characters, symbols, images, videos, and so on (original image of a virtual image) can be projected. Here, a small lens may be mounted between the display unit 20 and the eye to make it easier to focus the eye on an image or the like displayed on the half mirror of the display unit 20. Furthermore, a hologram pattern may be displayed on the half mirror of the display unit 20 to stereoscopically display an image or the like at a position away from the eye, thereby making it easier to focus the eye on the image or the like. Note that the display unit 20 may be configured only with a micro projector, and using the micro projector, characters, symbols, images, videos, and so on may be projected onto the retina of the user's eye.

The imaging unit 30 captures an image of a hand of the user, and in the seventh embodiment, is provided on a peripheral edge portion of the contact lens 400. As illustrated in FIG. 24, this imaging unit 30 includes a camera unit 31, an image processing unit 32, and a camera control unit 33.

The control unit 70 includes a central processing unit (CPU) and the like, and controls the entire display apparatus 1h according to the seventh embodiment. Specifically, the control unit 70 controls display of the virtual image (including virtual objects), and controls the imaging unit 30 to capture an image. This control unit 70 is provided on a peripheral edge portion of the contact lens 400 as illustrated in FIG. 23. Specifically, as illustrated in FIG. 24, the control unit 70 includes a display control unit 71, a detection unit 72, and an action determination unit 73.

The communication unit 80 communicates information with external devices, and in the seventh embodiment, as illustrated in FIG. 23, is provided on a peripheral edge portion of the contact lens 400. The storage unit 90 stores various programs, data, and the like. This storage unit 90 is also provided on a peripheral edge portion of the contact lens 400.

The antenna unit 500 is for transmitting and receiving data, images, and so on to and from external devices. As illustrated in FIG. 23, this antenna portion 500 is annular and provided on a peripheral edge portion of the contact lens 400.

Further, in the seventh embodiment, a micro battery (not illustrated) for supplying power to the display unit 20, the imaging unit 30, the control unit 70, the communication unit 80, and the storage unit 90 is mounted on the contact lens 400. Note that, as a method of supplying power to each unit, instead of mounting a micro battery on the contact lens 400, electromagnetic induction may be used to receive power from an external power source from an external transmitting antenna to a receiving antenna provided on the contact lens 400. Alternatively, a micro battery may be mounted on the contact lens 400, and electromagnetic induction may also be used to receive power from an external power source from an external transmitting antenna to a receiving antenna provided on the contact lens 400.

The display apparatus according to the seventh embodiment has the same advantageous effects as the first embodiment. Specifically, the display apparatus according to the seventh embodiment can be used to allow the user to move the user's own hand to move the virtual object of the hand accurately and easily to a desired location in the two-dimensional virtual object for operation. Therefore, as compared to the conventional devices in which the user operates, for example, a keyboard displayed appearing as if it is floating in a space with the user's own hand, the display apparatus according to the seventh embodiment can be used to enable accurate and easy operation on the virtual object for operation.

### Eighth Embodiment

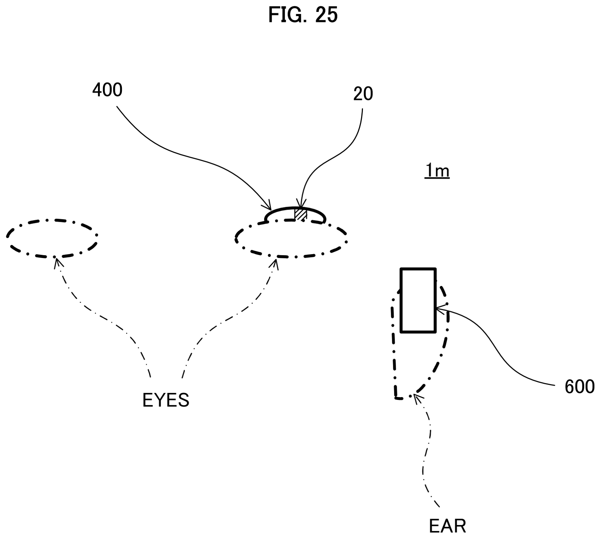

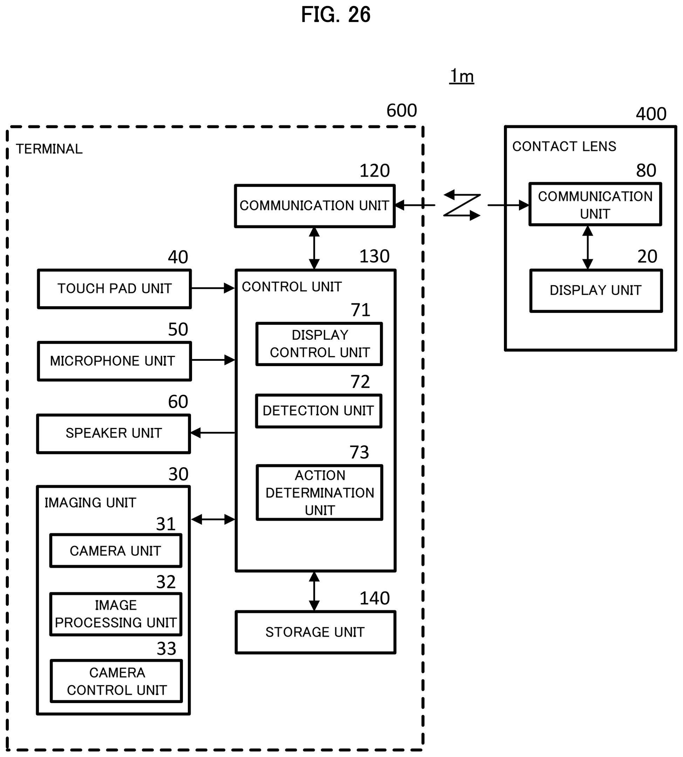

Next, a display apparatus according to an eighth embodiment of the present invention will be described. FIG. 25 is a schematic view of the display apparatus according to the eighth embodiment of the present invention, and FIG. 26 is a schematic block diagram of the display apparatus according to the eighth embodiment. Note that, in the eighth embodiment, the components having the same functions as those of each of the first to seventh embodiments described above are designated by the same reference numerals, and detailed description thereof will be omitted.

In the eighth embodiment, similarly to the seventh embodiment, a case will be described in which the display apparatus of the present invention is applied to a so-called smart contact lens for display, which is to be worn by an eye of a user to use. A display apparatus 1m according to the eighth embodiment is configured to allow a user to see a virtual image, and includes, as illustrated in FIGS. 25 and 26, a contact lens (wearable object) 400 to be worn on an eye of the user, a display unit 20 configured to display an original image of the virtual image, a communication unit 80, an antenna unit 500 (see FIG. 23), and a terminal 600. In the eighth embodiment, the display unit 20, the communication unit 80, and the antenna unit 500 are provided on the contact lens 400. Note that, in FIG. 25, the communication unit 80 and the antenna unit 500 are not illustrated.

The communication unit 80 is for enabling the display unit 20 provided on the contact lens 400 to perform wireless communication with the terminal 600. The display unit 20 is controlled by the terminal 600 via the antenna unit 500 and the communication unit 80 through wireless communication. Accordingly, in the eighth embodiment, unlike the seventh embodiment, the contact lens 400 does not include a control unit and the like for controlling the display unit 20.

The terminal 600 is configured separately from the contact lens 400. Here, the terminal 600 to be used is of the type that is wearable on an ear of the user, as illustrated in FIG. 25. As illustrated in FIG. 26, this terminal 600 includes a communication unit 120, a control unit 130, a storage unit 140, an imaging unit 30 configured to capture an image of an area in front of the user, a touch pad unit 40, a microphone unit 50, and a speaker unit 60. Here, when the terminal 600 is worn on the ear of the user, the lens of the camera unit 31 of the imaging unit 30 faces in the direction of the line of sight of the user. Note that, in the eighth embodiment, the terminal 600 does not include a terminal display unit.

Further, the terminal 600 has a function that performs wireless communication with external devices. This function is implemented in the communication unit 120. Accordingly, the terminal 600 can perform wireless communication with the display unit 20 via this communication unit 120 and the communication unit 80 provided on the contact lens 400. In this respect, the terminal 600 is wirelessly connected to the display unit 20.

The control unit 130 includes a central processing unit (CPU) and the like to control the entire terminal 600 and also control the display unit 20, the imaging unit 30, the touch pad unit 40, the microphone unit 50, and the speaker unit 60. In other words, the control unit 130 has the same functions as the control unit 70 in the display apparatus 1a according to the first embodiment, and includes, as illustrated in FIG. 26, a display control unit 71, a detection unit 72, and an action determination unit 73. Further, the storage unit 140 of the terminal 600 stores various programs, data, and the like. Such programs and data include the programs and data stored in the storage unit 90 of the display apparatus 1a according to the first embodiment.

The display apparatus according to the eighth embodiment has the same advantageous effects as the first embodiment. Specifically, the display apparatus according to the eighth embodiment can be used to allow the user to move the user's own hand to move the virtual object of the hand accurately and easily to a desired location in the two-dimensional virtual object for operation. Therefore, as compared to the conventional devices in which the user operates, for example, a keyboard displayed appearing as if it is floating in a space with the user's own hand, the display apparatus according to the eighth embodiment can be used to enable accurate and easy operation on the virtual object for operation.

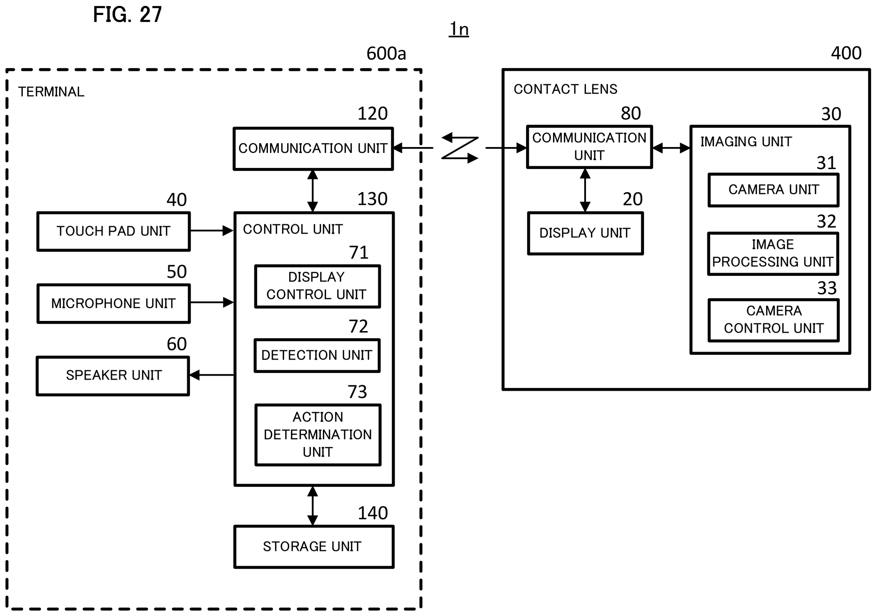

Note that, in the eighth embodiment, a case has been described in which the terminal 600 includes the imaging unit 30; however, the contact lens 400 may include the imaging unit 30. Illustrated in FIG. 27 is a schematic block diagram of a display apparatus 1n configured so that the contact lens 400 includes the imaging unit 30, according to a modification example of the eighth embodiment. In the display apparatus 1n according to the modification example of the eighth embodiment, a terminal 600a controls the imaging unit 30 provided on the contact lens 400 through wireless communication.

### Ninth Embodiment

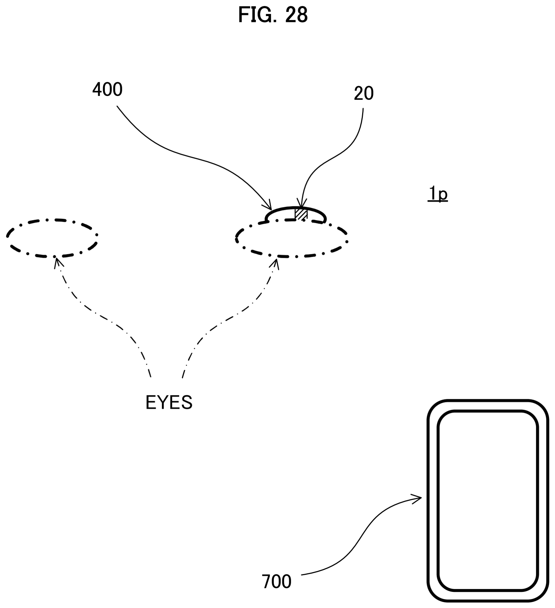

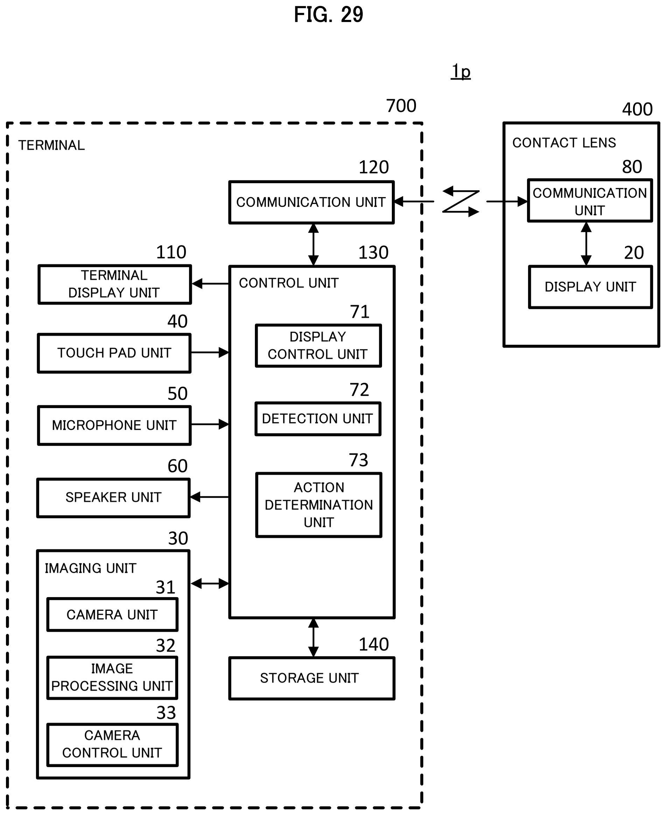

Next, a display apparatus according to a ninth embodiment of the present invention will be described. FIG. 28 is a schematic view of the display apparatus according to the ninth embodiment of the present invention, and FIG. 29 is a schematic block diagram of the display apparatus according to the ninth embodiment. Note that, in the ninth embodiment, the components having the same functions as those of each of the first to eighth embodiments described above are designated by the same reference numerals, and detailed description thereof will be omitted.

In the ninth embodiment, similarly to the eighth embodiment, a case will be described in which the display apparatus of the present invention is applied to a so-called smart contact lens for display, which is to be worn by an eye of a user to use. A display apparatus 1p according to the ninth embodiment is configured to allow a user to see a virtual image, and includes, as illustrated in FIGS. 28 and 29, a contact lens (wearable object) 400 to be worn on an eye of the user, a display unit 20 configured to display an original image of the virtual image, a communication unit 80, an antenna unit 500 (see FIG. 23), and a terminal 700. In the ninth embodiment, similarly to the eighth embodiment, the display unit 20, the communication unit 80, and the antenna unit 500 are provided on the contact lens 400.

The communication unit 80 is for enabling the display unit 20 provided on the contact lens 400 to perform wireless communication with the terminal 700. The display unit 20 is controlled by the terminal 700 via the antenna unit 500 and the communication unit 80 through wireless communication. Accordingly, in the ninth embodiment, similarly to the eighth embodiment, the contact lens 400 does not include a control unit and the like for controlling the display unit 20.

The terminal 700 is configured separately from the contact lens 400. The ninth embodiment differs from the eighth embodiment in that an existing terminal such as a smartphone is used as the terminal 700 as illustrated in FIG. 28. As illustrated in FIG. 29, this terminal 700 includes a terminal display unit 110, a communication unit 120, a control unit 130, a storage unit 140, an imaging unit 30 configured to capture an image of an area in front of the user, a touch pad unit 40, a microphone unit 50, and a speaker unit 60. Note that the terminal 700 is not limited to a smartphone, and a tablet, a smart watch, a digital audio player, a personal computer, a laptop computer, or the like may be used.

In order for the imaging unit 30 included in the terminal 700 to fully fulfill the role of capturing an image of a hand of the user, it is necessary to be careful about the arrangement of the terminal 700. For example, in use of a smartphone type of terminal 700, it is hung around the neck of the user using a strap, or is placed in a breast pocket of the user. In such cases, by disposing the lens of the camera unit 31 of the imaging unit 30 of the terminal 700 so as to face in the direction of the line of sight of the user, the imaging unit 30 can capture an image of an area in front of the user.

The terminal 700 can use the function of the communication unit 120 to perform wireless communication with external devices. Accordingly, the terminal 700 can perform wireless communication with the display unit 20 via this communication unit 120 and the communication unit 80 provided on the contact lens 400.

The control unit 130 includes a central processing unit (CPU) and the like to control the entire terminal 700 and also control the display unit 20, the imaging unit 30, the touch pad unit 40, the microphone unit 50, the speaker unit 60, and the terminal display unit 110. In other words, the control unit 130 has the same functions as the control unit 70 in the display apparatus 1a according to the first embodiment, and includes, as illustrated in FIG. 29, a display control unit 71, a detection unit 72, and an action determination unit 73. Further, the storage unit 140 of the terminal 700 stores various programs, data, and the like.

The display apparatus according to the ninth embodiment has the same advantageous effects as the first embodiment. Specifically, the display apparatus according to the ninth embodiment can be used to allow the user to move the user's own hand to move the virtual object of the hand accurately and easily to a desired location in the two-dimensional virtual object for operation. Therefore, as compared to the conventional devices in which the user operates, for example, a keyboard displayed appearing as if it is floating in a space with the user's own hand, the display apparatus according to the ninth embodiment can be used to enable accurate and easy operation on the virtual object for operation. In addition, the terminal having the control unit to control the display unit provided on the contact lens is configured separately from the contact lens. Therefore, as the terminal, for example, an existing terminal such as a smartphone can be used, so that it is possible to reduce the number of parts to be provided on the contact lens, resulting in a simplified configuration of a contact lens.

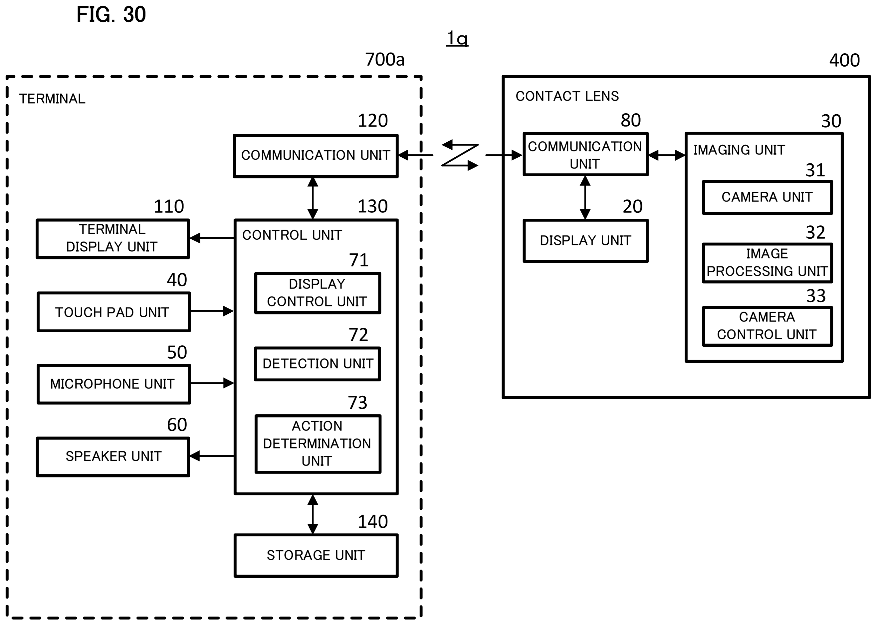

Note that, in the ninth embodiment, a case has been described in which the terminal 700 includes the imaging unit 30; however, the contact lens 400 may include the imaging unit 30. Illustrated in FIG. 30 is a schematic block diagram of a display apparatus 1q configured so that the contact lens 400 includes the imaging unit 30, according to a modification example of the ninth embodiment. In the display apparatus 1q according to the modification example of the ninth embodiment, a terminal 700a controls the imaging unit 30 provided on the contact lens 400 through wireless communication.

### Other Embodiments

The present invention is not limited to each of the above-described embodiments, and various modifications can be made within a scope of the spirit of the invention.

In each of the first to third and seventh to ninth embodiments described above, a case has been described in which the small projector 21 is disposed inside the housing H attached to a temple portion of the pair of glasses 10. However, the small projector 21 may be built into the pair of glasses 10.

Further, in each of the first to third and seventh to ninth embodiments described above, a case has been described in which the display unit 20 includes the small projector 21 having a display device, the optical system 22, and a half mirror serving as a projection unit onto which an image or video displayed on the display device of the small projector 21 is projected via the optical system 22. However, for example, a hologram sheet, a translucent screen, a transmissive screen, a holographic optical element, or a diffraction grating may be used instead of the half mirror.

Furthermore, in each of the first to third and seventh to ninth embodiments described above, a case has been described in which the display unit 20 has the small projector 21, the optical system 22, and the half mirror. However, the display unit may not include a small projector, an optical system, or a half mirror, and may be configured only with a display device such as a liquid crystal panel, an organic EL panel, an inorganic EL panel, a micro OLED display, or a micro LED display. Alternatively, the display unit may be configured with such a display device and a lens. Here, this display device may be of a transmissive type, semi-transmissive type, transparent type, or translucent type, or may be of a non-transmissive type or non-transparent type. Such a display device can then be built into a pair of glasses, a contact lens, or an HMD. When the user just sees an image or video (original image) displayed on the display device, the image or video appears as if it is floating in a space. This image or video that appears as if it is floating in the space is a virtual image (including virtual objects). Further, the display unit 20 to be used may include a plurality of display devices. For example, the plurality of display devices may be used and arranged to stack one on another. The plurality of display devices arranged to stack one on another may be of different types (e.g., a transmissive type and a non-transmissive type) and may be of different sizes. In this case, different images or videos can be displayed on the respective display device. For example, an image or video (original image) corresponding to a virtual object for operation (two-dimensional virtual object) can be projected onto a certain display device, and an image or video of an external environment or VR can be projected onto another display device. Further, an image or video of an external environment or VR may be projected onto a certain display device, and an image or video (original image) corresponding to a virtual object for operation may be projected onto the display unit 20 that includes the small projector 21, the optical system 22, and the projection unit, which is disposed in front of the display device. Furthermore, one of the display devices described above may be used to overlay different images or videos onto the display device to project. For example, an image or video (original image) corresponding to a virtual object for operation, and an external environment may be overlaid onto one display device to project. Such a configuration of the display unit 20 can of course be applied to each of the fourth to sixth embodiments.

In each of the first to third embodiments described above, a case has been described in which the imaging unit 30 is disposed inside the housing H attached to a temple portion of the pair of glasses 10. However, the imaging unit 30 may be built into the pair of glasses 10. Further, in each of the fourth to sixth embodiments described above (excluding the modification example of the fourth embodiment), the imaging unit 30 may be attached to a temple portion of the pair of glasses 10.

In each of the embodiments described above, a case has been described in which a three-dimensional orthogonal coordinate system is set in which the direction of the optical axis of the camera is the Z-axis direction, and the two orthogonal directions in a plane perpendicular to the optical axis of the camera are the X-axis direction and the Y-axis direction, respectively; and three-dimensional position information for identifying a hand is calculated in the set three-dimensional orthogonal coordinate system. Specifically, a case has been described in which the detection unit 72 calculates, based on image data of an image captured by the imaging unit 30, two-dimensional position information for identifying a hand on a plane perpendicular to the optical axis of the camera unit 31 included in the imaging unit 30, and also calculates, based on the image data and distance data obtained by the imaging unit 30, one-dimensional position information for identifying the hand in the optical axis direction of the camera unit 31, and then acquires three-dimensional position information composed of the two-dimensional position information and the one-dimensional position information, as information related to the motion of the hand. However, the three-dimensional position information for identifying the hand is not limited to the three-dimensional position information (XYZ coordinate information) of the hand in the above-described three-dimensional orthogonal coordinate system (XYZ coordinate system). Three-dimensional position information of a hand in any three-dimensional orthogonal coordinate system can be used. Furthermore, the method by which the detection unit 72 acquires information related to the motion of the hand is not limited to the above-described method, and various methods can be used. For example, the detection unit 72 may identify, based on the image data and distance data obtained by the imaging unit 30, a two-dimensional plane on which a hand is located, and calculate two-dimensional position information for identifying the hand on the identified two-dimensional plane, and also calculate one-dimensional position information for identifying the hand in a direction perpendicular to the identified two-dimensional plane, and then acquire three-dimensional position information composed of the two-dimensional position information and the one-dimensional position information, as information related to the motion of the hand. In this case, the display control unit 71 can equate the two-dimensional plane on which the hand is located with the plane including the two-dimensional virtual object for operation, and can determine the display position of the virtual object of the hand on the virtual object for operation, based on the two-dimensional position information for identifying the hand on the two-dimensional plane, from the three-dimensional position information for identifying the hand transmitted from the detection unit 72. Further, the display position of the virtual object of the hand (or finger(s)) on the virtual object for operation can be determined based on the three-dimensional position information (XYZ coordinate information) of the hand or finger(s) in an optionally set three-dimensional coordinate system. Note that an equation for a plane in a three-dimensional space can be represented as aX + bY + cZ = 0, where a, b, and c are constants. By calculating the three-dimensional position coordinates of any three points on the hand and using them to determine the three constants a, b, and c, an equation for a two-dimensional plane on which the hand is located in the three-dimensional space can be specified.

In each of the embodiments described above, a case has been described in which the imaging unit has a function as a distance measurement unit configured to measure a distance to the hand of the user and output distance data of the measured distance, and the detection unit calculates three-dimensional position information for identifying the hand based on the image data and distance data obtained by the imaging unit, and acquires the calculated three-dimensional position information as the information related to the motion of the hand. However, the display apparatus of the present invention may include, instead of the distance measurement unit and the detection unit, a position information measurement unit configured to measure three-dimensional position information of the hand of the user in an optionally set three-dimensional coordinate system and acquire the measured three-dimensional position information as the information related to the motion of the hand. In this case, the display control unit determines the display position of the virtual object of the hand on the virtual object for operation, based on the three-dimensional position information for identifying the hand transmitted from the position information measurement unit.

In each of the embodiments described above, a case has been described in which the virtual object of the hand is a two-dimensional virtual object. However, the virtual object of the hand may be a three-dimensional virtual object.

In the display apparatus of each of the embodiments described above, a case has been described in which the display control unit 71 controls display of the virtual object for operation serving as a two-dimensional virtual object. However, the display control unit 71 may be configured to control display of a three-dimensional virtual object and also control the display unit 20 so that the display apparatus can display the virtual object for operation serving as the three-dimensional virtual object. In a state of the display apparatus displaying a three-dimensional virtual object for operation, the display control unit 71 can control display of the virtual object of the hand such that the virtual object of the hand moves on a surface of the three-dimensional virtual object for operation (this surface including a two-dimensional curved surface) or on a plane formed by a top surface of the three-dimensional virtual object for operation in response to the motion of the hand of the user. Here, the storage unit 90 stores image data of original images corresponding to three-dimensional virtual objects (including three-dimensional virtual objects for operation), and data related to the virtual objects for operation.

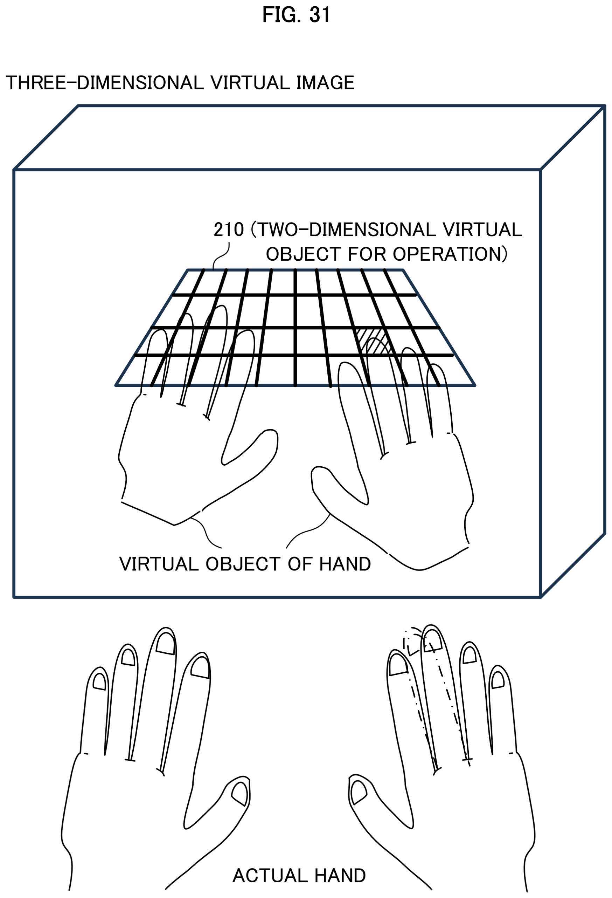

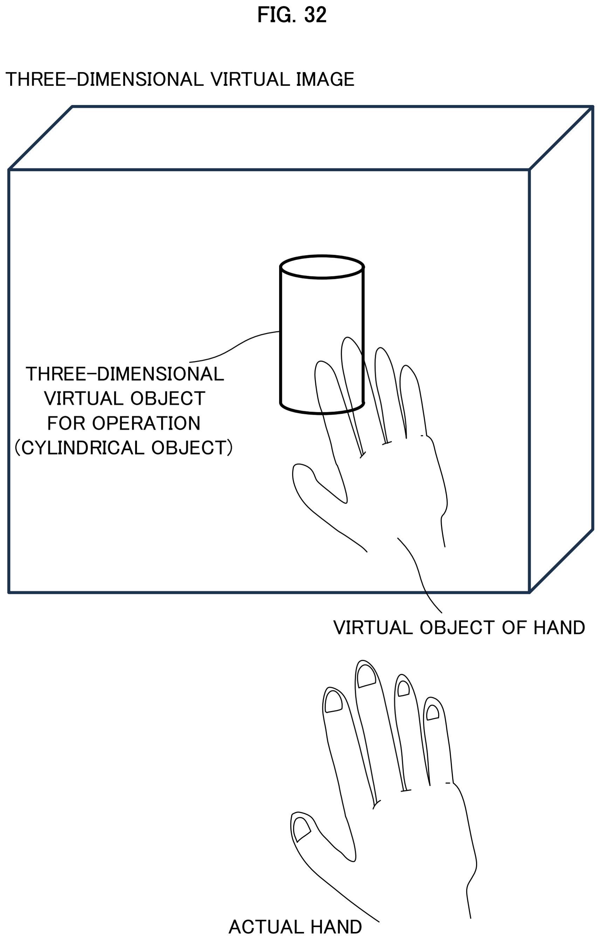

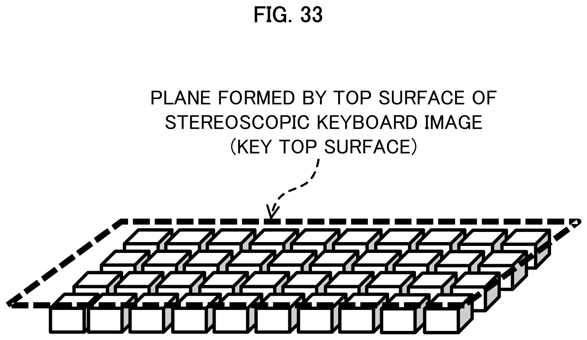

FIG. 31 illustrates an example of virtual objects of hands displayed on a two-dimensional virtual object for operation in a three-dimensional space, and FIG. 32 illustrates an example of a virtual object of a hand displayed on a three-dimensional virtual object for operation in a three-dimensional space. In FIGS. 31 and 32, as the virtual object of the hand, a virtual object representing a typical hand shape is used. In FIG. 31, the two-dimensional virtual object for operation is a plane keyboard image 210. This plane keyboard image 210 is a two-dimensional virtual object, and the surface of a keyboard represented by the plane keyboard image 210 is displayed as a two-dimensional plane in the three-dimensional space, and extends in the depth direction. In this case, the display control unit 71 controls display of the virtual object of the hand such that the virtual object of the hand moves on the two-dimensional plane representing the surface of the plane keyboard image 210 in response to the motion of the hand of the user, based on the information related to the motion of the hand (three-dimensional position information) transmitted from the detection unit 72. Thus, the display control unit 71 can identify the two-dimensional plane representing the surface of the plane keyboard image 210 based on data related to the plane keyboard image 210, and therefore, when the virtual object of the hand is on the plane keyboard image 210, controls display of the virtual object of the hand so that the virtual object of the hand is allowed to move only on the two-dimensional plane representing the surface of the plane keyboard image 210. On the other hand, in FIG. 32, the three-dimensional virtual object for operation is an image of a cylindrical object. This image of the cylindrical object is a three-dimensional virtual object, and the surface of the cylindrical object is displayed as a two-dimensional curved surface (side surface) and two-dimensional flat surfaces (top and bottom surfaces) in the three-dimensional space. In this case, the display control unit 71 controls display of the virtual object of the hand such that the virtual object of the hand moves on the two-dimensional curved surface and the two-dimensional flat surfaces, which represent the surfaces of the cylindrical object, in response to the motion of the hand of the user, based on the information related to the motion of the hand (three-dimensional position information) transmitted from the detection unit 72. Note that, in the example of FIG. 31, instead of the plane keyboard image (two-dimensional virtual object for operation), a keyboard image may be used that represents a stereoscopic keyboard (three-dimensional virtual object for operation) as the virtual object for operation. In this case, for example, the display control unit 71 can identify a key top surface (two-dimensional plane) formed by a top surface of the stereoscopic keyboard image 210 (three-dimensional virtual object for operation) based on data related to the stereoscopic keyboard image 210, and therefore, when the virtual object of the hand is on the stereoscopic keyboard image 210, controls display of the virtual object of the hand so that the virtual object of the hand is allowed to move only on the key top surface of the stereoscopic keyboard image 210. Here, FIG. 33 illustrates an example of a plane formed by a top surface of a stereoscopic keyboard image, that is, a key top surface.

Note that, in the examples of FIGS. 31 and 32, the display control unit 71 may control display of the virtual object of the hand such that the virtual object of the hand moves in the three-dimensional space in response to the motion of the hand of the user. Whether movement display on the surface of the virtual object for operation or movement display in the three-dimensional space is to be controlled by the display control unit 71 can be set in advance on a predetermined setting screen.

In each of the embodiments described above, a case has been described in which a two-dimensional virtual object representing a typical hand shape is used as the virtual object of the hand. However, at user's option, a two-dimensional or three-dimensional virtual object representing the shape of an object other than a hand can be used instead of the virtual object of the hand. For example, when one, some, or all of fingers of the hand of the user are clenched, the user can use the clenched hand as a mouse to issue an instruction to the virtual object for operation. In this case, the detection unit 72 is configured to determine whether or not one, some, or all of fingers of the hand of the user are clenched, based on the image data of an image captured by the imaging unit 30, and when one, some, or all of fingers of the hand of the user are determined to be clenched, output information indicating that one, some, or all of fingers of the hand of the user are clenched. Then, when the information indicating that one, some, or all of fingers of the hand of the user are clenched is transmitted from the detection unit 72, the display control unit 71 uses a virtual object of a mouse body that is modeled after a mouse body and a virtual object of a mouse cursor that is modeled after a mouse cursor, instead of the virtual object of the hand, to display the virtual object of the mouse body at a predetermined location in the virtual image, and controls, based on the information related to the motion of the hand transmitted from the detection unit 72, display of the virtual object of the mouse cursor such that the virtual object of the mouse cursor moves on a same plane as the virtual object for operation in response to the motion of the hand. The virtual object of the mouse body and the virtual object of the mouse cursor are virtual objects that are modeled after a mouse. In addition, to control motion of the virtual object of the mouse cursor, the display control unit 71 can determine a movement amount of the virtual object of the mouse cursor in the virtual image, based on an actual movement distance of the hand calculated based on the information related to the motion of the hand transmitted from the detection unit 72. Further, the ratio between the actual movement distance of the hand and the movement distance of the virtual object of the mouse cursor on the virtual image may be changeable on a setting screen or the like.

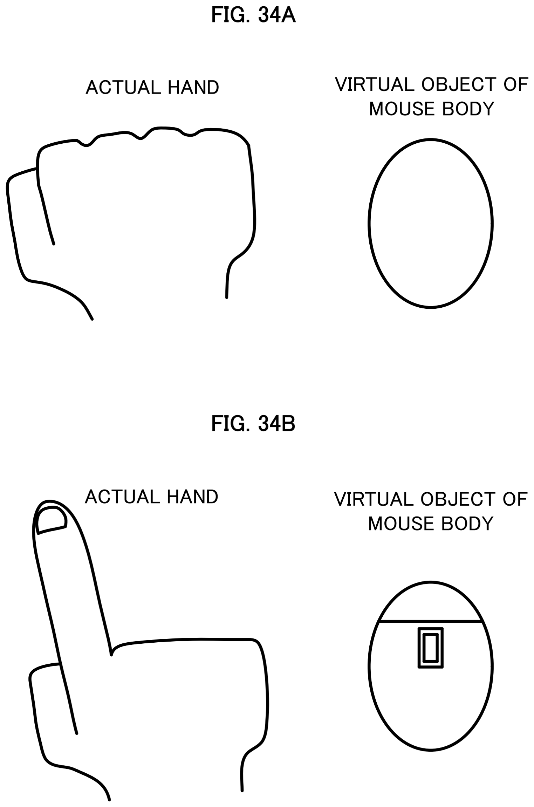

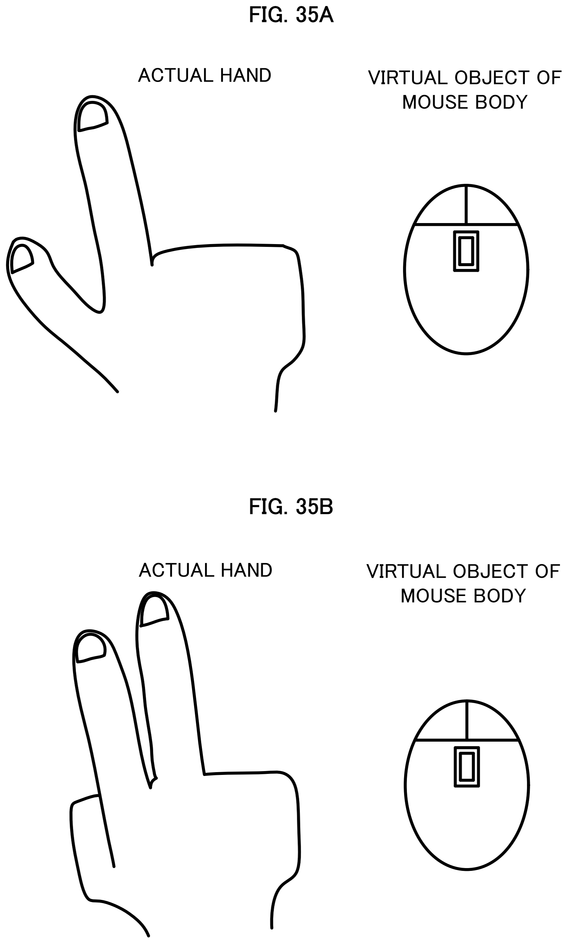

FIGS. 34A, 34B, 35A, and 35B each illustrate an example of a virtual object of a mouse body. When all fingers of the hand of the user are clenched, the detection unit 72 transmits to the display control unit 71 information indicating that all fingers of the hand of the user are clenched, and the display control unit 71 displays the virtual object of the mouse body, representing only the outline of a mouse, at a specified location in the virtual image, as illustrated in FIG. 34A. Further, when the hand of the user is clenched with one finger stretched out, the detection unit 72 transmits to the display control unit 71 information indicating that the hand of the user is clenched with one finger stretched out, and the display control unit 71 displays the virtual object of the mouse body, representing the shape of a mouse having only one click button, at a specified location in the virtual image, as illustrated in FIG. 34B. Further, when the hand of the user is clenched with two fingers stretched out, the detection unit 72 transmits to the display control unit 71 information indicating that the hand of the user is clenched with two fingers stretched out, and the display control unit 71 displays the virtual object of the mouse body, representing the shape of a mouse with a right click button and a left click button drawn, at a specified location in the virtual image, as illustrated in FIGS. 35A and 35B. Here, the two fingers stretched out of the user may be the thumb and index finger as illustrated in FIG. 35A or the index finger and middle finger as illustrated in FIG. 35B.

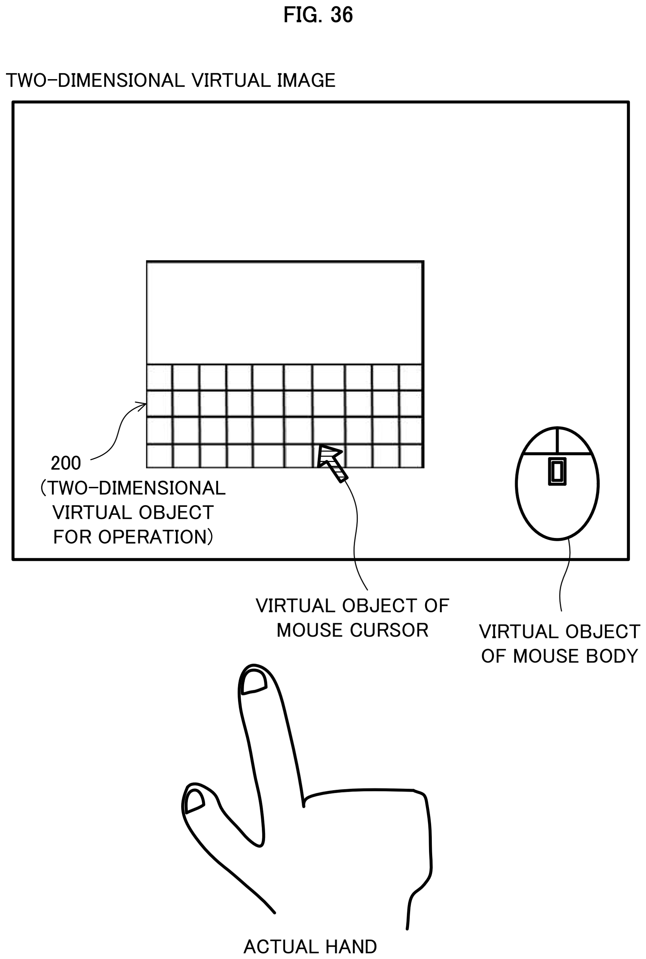

FIG. 36 illustrates examples of a virtual object of a mouse body and a virtual object of a mouse cursor displayed on the same plane as a two-dimensional virtual object for operation. In FIG. 36, a character input screen 200 is used as the virtual object for operation. Further, the detection unit 72 recognizes that the hand of the user is clenched with two fingers stretched out, and accordingly, the display control unit 71 displays a virtual object for a mouse body having a right click button and a left click button. When information indicating that the hand of the user is clenched with two fingers stretched out is transmitted from the detection unit 72, the action determination unit 73 determines, based on the information related to the motion of the hand transmitted from the detection unit 72, which one of the specific actions has been performed using which one of the stretched two fingers. Then, when information indicating that a click action has been performed using the left (or right) finger of the two fingers is transmitted from the action determination unit 73, the display control unit 71 recognizes that a mouse left-click operation (or mouse right-click operation) has been performed on a part of the virtual object for operation corresponding to the virtual object of the mouse cursor when the click action was performed, and controls display of the virtual object for operation and/or display of the virtual object of the mouse in accordance with the recognized left-click operation (or right-click operation).

On the other hand, even in a state of the display control unit 71 displaying a virtual object of a mouse body having only one click button, the processes performed by the action determination unit 73 and the display control unit 71 are the same as those described above. Specifically, when information indicating that the hand of the user is clenched with one finger stretched out is transmitted from the detection unit 72, the action determination unit 73 determines, based on the information related to the motion of the hand transmitted from the detection unit 72, which one of the specific actions has been performed using the stretched finger. Then, when information indicating that a click action has been performed using one finger is transmitted from the action determination unit 73, the display control unit 71 recognizes that a mouse click operation has been performed on a part of the virtual object for operation corresponding to the virtual object of the mouse cursor when the click action was performed, and controls display of the virtual object for operation and/or display of the virtual object of the mouse in accordance with the recognized click operation.

Further, when information indicating that all fingers of the hand of the user are clenched is transmitted from the detection unit 72, the action determination unit 73 determines, based on the information related to the motion of the hand transmitted from the detection unit 72, which one of the specific actions has been performed using the hand itself with all fingers clenched. For example, when the user performs an action such as knocking with a hand with all fingers clenched, the action determination unit 73 determines the action as a click action. In other words, when all fingers of the hand of the user are clenched, the action of knocking with the clenched hand is a click action. Then, when information indicating that a click action has been performed using the hand with all fingers clenched is transmitted from the action determination unit 73, the display control unit 71 recognizes that a mouse click operation has been performed on a part of the virtual object for operation corresponding to the virtual object of the mouse cursor when the click action was performed, and controls display of the virtual object for operation and/or display of the virtual object of the mouse in accordance with the recognized click operation. Further, when the user performs an action of scrolling with the hand itself with all fingers clenched, the action determination unit 73 determines the action as a scroll motion.

Note that, in the example of FIG. 36, a case has been described in which the virtual object of the mouse is used that is composed of the virtual object of the mouse body and the virtual object of the mouse cursor; however, only the virtual object of the mouse cursor may be used as the virtual object of the mouse without displaying the virtual object of the mouse body. Further, when the hand of the user is clenched with one finger stretched out, the user may be able to switch between mouse operation and keyboard input operation so that the user can perform keyboard input onto the keyboard with the stretched finger.

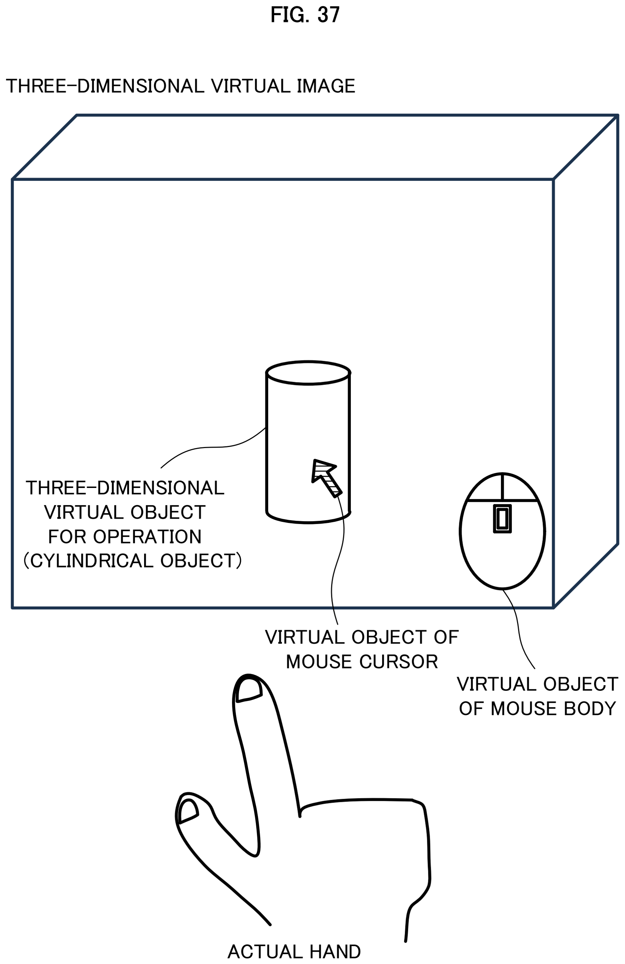

FIG. 37 illustrates examples of a virtual object of a mouse body and a virtual object of a mouse cursor displayed in the same space as a three-dimensional virtual object for operation. In FIG. 37, an image of a cylindrical object is used as a three-dimensional virtual object for operation. Further, the detection unit 72 recognizes that the hand of the user is clenched with two fingers stretched out, and accordingly, the display control unit 71 displays the virtual object of the mouse body having a right click button and a left click button. In this case as well, when information indicating that a click action has been performed using the left (or right) finger of the two fingers is transmitted from the action determination unit 73, the display control unit 71 recognizes that a mouse left-click operation (or mouse right-click operation) has been performed on a part of the virtual object for operation corresponding to the virtual object of the mouse cursor when the click action was performed, and controls display of the virtual object for operation and/or display of the virtual object of the mouse in accordance with the recognized left-click operation (or right-click operation).

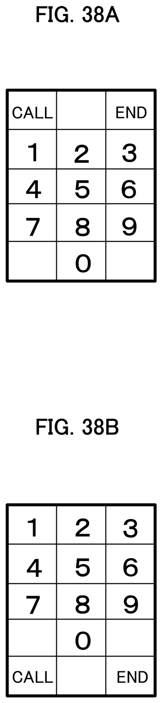

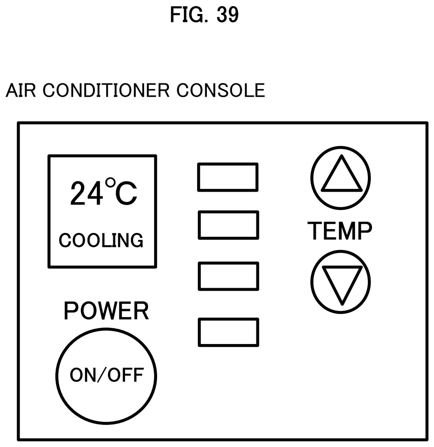

In each of the embodiments described above, a case has been described in which the virtual object for operation is a model of a keyboard, and is mainly a character input screen including a keyboard image. However, the virtual object for operation is not limited to a character input screen, and may be, for example, a model of a numeric keypad of a smartphone, or a model of a console of a remote controller for a home appliance. In this case, the display apparatus displays the virtual object for operation, and then, when the user performs an operation on the virtual object for operation by moving the user's hand to move the virtual object of the hand on the virtual object for operation, the control unit 70 of the display apparatus generates an instruction signal (command) indicating the details of that operation, and wirelessly transmits the generated instruction signal to the above-mentioned smartphone or home appliance via the communication unit 80. As a result, the above-mentioned smartphone or home appliance can be operated remotely. FIGS. 38A and 38B each illustrate an example of a virtual object for operation that is modeled after a numeric keypad of a smartphone. When the user enters a desired phone number on a virtual object for operation as illustrated in FIG. 38A or 38B, the control unit 70 generates a command to call the phone number, and transmits the command to the smartphone via the communication unit 80, so that the user can make a call without holding the smartphone by hand. FIG. 39 illustrates an example of a virtual object for operation that is modeled after a console of a remote controller for an air conditioner. For example, when the user performs a tap (click) operation on a button to lower the set temperature on the virtual object for operation illustrated in FIG. 39 by moving the user's hand to move the virtual object of the hand on the virtual object for operation, the control unit 70 generates a command to lower the set temperature, and transmits the command to the air conditioner via the communication unit 80, so that the user can easily lower the set temperature of the air conditioner.

In each of the embodiments described above, a case has been described in which the display apparatus of the present invention is applied to a glasses-type terminal to be worn on the head of a user to use in the same manner as glasses or to a smart contact lens for display to be worn on an eye of a user to use. However, application examples of the display apparatus of the present invention are not limited to these. The display apparatus of the present invention can be applied to various types of display apparatuses configured to display virtual images (videos) in environments using augmented reality (AR), virtual reality (VR), mixed reality (MR), or the like, specifically, a glasses-type terminal, a head-mounted display (HMD) terminal, a smart contact lens for display, and so on.

Note that, in each of the embodiments described above, when the user performs key input operation (typing operation) with both hands while seeing a two-dimensional virtual object for operation or a three-dimensional virtual object for operation, which is modeled after a keyboard, artificial intelligence (AI) technology can be used to identify the key on which the input operation was performed. This will now be described in a little more detail. When a user performs input operations using a normal keyboard, the relative positions of both hands, the relative positions of adjacent fingers, the shape of the hand, the positions of fingers, and so on change. Therefore, by analyzing the details of such changes in the hands and fingers, the key on which an input operation is to be performed can be identified. From this, a learned model for identifying an input key is generated as follows. First, video data (image data) is acquired of a person typing each key on an actual keyboard using each finger of the person's own hands. Then, information on each key is added to the acquired video data representing the key being typed. Such video data to which the key information has been added is training data. Next, such pieces of training data can be subjected to machine learning such as deep learning to generate a learned model. In this learned model, the input is image data of an image captured by the imaging unit in which the user performs a key input action with the user's own hand(s) while seeing a two-dimensional virtual object for operation or a three-dimensional virtual object for operation, which is modeled after a keyboard; the output is a pair of a keyboard key and a finger of the user, corresponding to the key input action. The learned model thus generated is stored in the storage unit. Further, in this case, the control unit includes a discrimination unit configured to discriminate the input key using the learned model. Specifically, when receiving, from the imaging unit, image data of a captured image in which the user performs a key input action with the user's own hand(s), the discrimination unit can use the learned model stored in the storage unit to discriminate what key was typed with which one of the fingers of the hands of the user in the details of the key input action appearing in the image data. Furthermore, the user may set in advance on a setting screen which keys on the keyboard will be typed with each finger of both hands. The settings on this setting screen are stored in the storage unit as finger-key correspondence information. In this case, the discrimination unit can refer to the finger-key correspondence information in addition to the learned model stored in the storage unit, thereby quickly discriminating what key was typed with which one of the fingers of the hands of the user. Of course, even when the user performs a key input in a manner that does not follow the contents of the finger-key correspondence information, the above-described AI technology can be used to discriminate what key was typed with which one of the fingers of the hands of the user. Further, the contents of the finger-key correspondence information can be changed or deleted as appropriate on the setting screen. Note that, even in the case of identifying keys using AI technology as described above, when the display unit is controlled to display a stereoscopic keyboard image, which is a three-dimensional virtual object for operation, the display control unit may control display of a virtual object of a hand so that the virtual object of the hand is allowed to move only on a key top surface (two-dimensional plane) formed by a top surface of the stereoscopic keyboard image.

Further, in each of the second, third, fifth, sixth, eighth, and ninth embodiments described above, a case has been described in which a terminal configured separately from a pair of glasses, an HMD, or a contact lens, which serves as a wearable object, has all of the functions of the display control unit, the detection unit, and the action determination unit. However, the terminal may have one or some of the functions of the display control unit, the detection unit, and the action determination unit.

Furthermore, in each of the seventh, eighth, and ninth embodiments described above, a case has been described in which the smart contact lens is worn on one eye of the user. However, the smart contact lenses may be worn on both eyes of the user. In this case, in the seventh embodiment, the two smart contact lenses can communicate with each other. Further, in the eighth embodiment, one terminal 600 may control the display units 20 provided on two smart contact lenses, or two terminals 600 may be provided and each of the two terminals 600 may control the display unit 20 provided on each of the two smart contact lenses. In the case where two terminals 600 are provided, the two terminals 600 can communicate with each other. Furthermore, in the ninth embodiment, one terminal 700 may control the display units 20 provided on two smart contact lenses, or two terminals 700 may be provided and each of the two terminals 700 may control the display unit 20 provided on each of the two smart contact lenses. In the case where two terminals 700 are provided, the two terminals 700 can communicate with each other.

Note that, in each of the seventh, eighth, and ninth embodiments described above, in the case where smart contact lenses are worn on both eyes of the user, different images or videos can be displayed on the display unit of the smart contact lens worn on the left eye and the display unit of the smart contact lens worn on the right eye. For example, by projecting an image for the left eye onto the display unit of the smart contact lens worn on the left eye and an image for the right eye onto the display unit of the smart contact lens worn on the right eye, the display apparatus can display a three-dimensional virtual image (including virtual objects) to be stereoscopically seen by the user.

### Industrial Applicability

As described above, in the display apparatus of the present invention, the display control unit controls display of the virtual object of the hand such that the virtual object of the hand moves on the same plane as the two-dimensional virtual object for operation, on a surface of the three-dimensional virtual object for operation, or on a plane formed by a top surface of the three-dimensional virtual object for operation in response to the motion of the hand of the user. This does not allow the virtual object of the hand to move in the depth direction relative to the virtual object for operation, and allows the virtual object of the hand to move only on the same plane as the virtual object for operation. As a result, the user can move the user's own hand to move the virtual object of the hand accurately and easily to a desired location on the virtual object for operation. Thus, as compared to the conventional devices in which the user operates a keyboard (virtual object for operation) displayed appearing as if it is floating in a space with the user's own hand, the display apparatus of the present invention can be used to enable accurate and easy operation on the virtual object for operation. Therefore, the present invention can be applied to various types of display apparatuses configured to display a virtual image (video) in environments using augmented reality (AR), virtual reality (VR), mixed reality (MR), or the like.

### Description of the Reference Numeral

- 1a, 1b, 1c, 1d, 1e, 1f, 1g, 1h, 1m, 1n, 1p, 1q: Display apparatus
- 10: Pair of glasses (wearable object)
- 11: Lens part
- 20, 20d: Display unit
- 21: Small projector
- 22: Optical system
- 25: Display device
- 26: Lens
- 30: Imaging unit
- 31: Camera unit (distance measurement unit)
- 32: Image processing unit
- 33: Camera control unit
- 40: Touch pad unit
- 50: Microphone unit
- 60: Speaker unit
- 70: Control unit
- 71: Display control unit
- 72: Detection unit
- 73: Action determination unit
- 80: Communication unit
- 90: Storage unit
- 100, 600, 600a, 700, 700a: Terminal
- 110: Terminal display unit
- 120: Communication unit
- 130: Control unit
- 140: Storage unit
- 200: Character input screen
- 210: Keyboard image
- 220: Display area
- 221: Search screen
- 2211: Keyword input field
- 2212: Search result display field
- 300: Cable
- 400: Contact lens
- 500: Antenna unit
- H, H1, H2: Housing

In the following clauses, preferred embodiments of the invention are described:
1 . A display apparatus configured to allow a user to see a virtual image, comprising:
   a wearable object to be worn on a head of a user;
   a display unit provided on the wearable object to display an original image that is an image as an original of the virtual image;
   an imaging unit configured to capture an image of a hand of the user and output image data of the captured image;
   a detection unit configured to detect motion of the hand of the user using the image data obtained by the imaging unit and output information related to the motion of the hand; and
   a display control unit configured to control display of the virtual image by controlling the display unit,
   wherein the display control unit is configured to:
      control the display unit to control display of a two-dimensional virtual object for operation that is used for the user to indicate operation details with the hand and a virtual object of a hand that is modeled after the hand, as elements of the virtual image; and
      control display of the virtual object of the hand such that the virtual object of hand moves on a same plane as the two-dimensional virtual object for operation in response to the motion of the hand, based on the information related to the motion of the hand transmitted from the detection unit.
2. The display apparatus according to clause 1, further comprising
   an action determination unit configured to:
   determine, based on the image data obtained by the imaging unit and the information related to the motion of the hand transmitted from the detection unit, whether or not the user has performed, using the hand, one of specific actions including a tap (click) action and a scroll action; and
   output information related to details of the specific action made by the hand determined to have been performed as the one of specific actions,
   wherein, when the information related to details of the specific action is transmitted from the action determination unit, the display control unit is configured to:
      recognize the details of the specific action performed by the user; and
      control display of the virtual object for operation and/or display of the virtual object of the hand in accordance with the recognized details of the specific action.
3. The display apparatus according to clause 2, wherein
   when information indicating that the tap (click) action has been performed is transmitted from the action determination unit as the information related to the details of the specific action, the display control unit is configured to control display of the virtual object of the hand such that a part of the virtual object of the hand corresponding to a finger that performed the tap (click) action moves in a depth direction relative to the virtual object for operation.
4. The display apparatus according to clause 2, wherein
   the virtual object for operation is a model of a keyboard, a model of a numeric keypad, or a model of a console of a remote controller, and
   when information indicating that the tap (click) action has been performed is transmitted from the action determination unit as the information related to the details of the specific action, the display control unit is configured to control display of the virtual object of the hand such that a part of the virtual object of the hand corresponding to a finger that performed the tap (click) action moves in a depth direction relative to the virtual object for operation.
5. The display apparatus according to clause 2, wherein
   when information indicating that the tap (click) action has been performed is transmitted from the action determination unit as the information related to the details of the specific action, the display control unit is configured to control display of the virtual object for operation such that a part of the virtual object for operation where a part of the virtual object of the hand corresponding to a finger that performed the tap (click) action is positioned is displayed in a display form including a highlighting form wherein the display form is different from a default display form.
6. The display apparatus according to clause 2, wherein
   the virtual object for operation is a model of a keyboard, a model of a numeric keypad, or a model of a console of a remote controller, and
   when information indicating that the tap (click) action has been performed is transmitted from the action determination unit as the information related to the details of the specific action, the display control unit is configured to control display of the virtual object for operation such that a part of the virtual object for operation where a part of the virtual object of the hand corresponding to a finger that performed the tap (click) action is positioned is displayed in a display form including a highlighting form wherein the display form is different from a default display form.
7. The display apparatus according to clause 1, wherein
   the imaging unit has a function as a distance measurement unit configured to measure a distance to the hand of the user and output distance data of the measured distance,
   the detection unit is configured to calculate three-dimensional position information for identifying the hand based on the image data and the distance data obtained by the imaging unit, and acquire the calculated three-dimensional position information as the information related to the motion of the hand, and
   the display control unit is configured to determine a display position of the virtual object of the hand on the virtual object for operation, based on the three-dimensional position information for identifying the hand transmitted from the detection unit.
8. The display apparatus according to clause 1, further comprising
   a position information measurement unit configured to measure three-dimensional position information of the hand of the user in an optionally set three-dimensional coordinate system, and acquire the measured three-dimensional position information as the information related to the motion of the hand,
   wherein the display control unit is configured to determine a display position of the virtual object of the hand on the virtual object for operation, based on the three-dimensional position information for identifying the hand transmitted from the position information measurement unit.
9. The display apparatus according to clause 2, wherein
   the detection unit is configured to determine whether or not one, some, or all of fingers of the hand of the user are clenched, based on the image data obtained by the imaging unit, and when one, some, or all of fingers of the hand of the user are determined to be clenched, output information indicating that one, some, or all of fingers of the hand of the user are clenched, and
   when the information indicating that one, some, or all of fingers of the hand of the user are clenched is transmitted from the detection unit,
   the display control unit is configured to:
      use, at user's option, a virtual object of a mouse body that is modeled after a mouse body and a virtual object of a mouse cursor that is modeled after a mouse cursor, instead of the virtual object of the hand, to display the virtual object of the mouse body at a predetermined location in the virtual image; and
      control, based on the information related to the motion of the hand transmitted from the detection unit, display of the virtual object of the mouse cursor such that the virtual object of the mouse cursor moves on a same plane as the virtual object for operation in response to the motion of the hand.
10. The display apparatus according to clause 9, wherein
   when information indicating that the hand of the user is clenched with one finger stretched out is transmitted from the detection unit, the action determination unit is configured to determine, based on the information related to the motion of the hand transmitted from the detection unit, which one of the specific actions has been performed using the stretched finger, and
   when information indicating that the click action has been performed using the one finger is transmitted from the action determination unit, the display control unit is configured to recognize that a mouse click operation has been performed on a part of the virtual object for operation corresponding to the virtual object of the mouse cursor when the click action was performed.
11. The display apparatus according to clause 9, wherein
   when information indicating that the hand of the user is clenched with two fingers stretched out is transmitted from the detection unit, the action determination unit is configured to determine, based on the information related to the motion of the hand transmitted from the detection unit, which one of the specific actions has been performed using which one of the stretched two fingers, and
   when information indicating that the click action has been performed using the left (or right) finger of the two fingers is transmitted from the action determination unit, the display control unit is configured to recognize that a mouse left-click operation (or mouse right-click operation) has been performed on a part of the virtual object for operation corresponding to the virtual object of the mouse cursor when the click action was performed.
12. The display apparatus according to clause 9, wherein
   when information indicating that all fingers of the hand of the user are clenched is transmitted from the detection unit, the action determination unit is configured to determine, based on the information related to the motion of the hand transmitted from the detection unit, which one of the specific actions has been performed using the hand with all fingers clenched, and
   when information indicating that the click action has been performed using the hand with all fingers clenched is transmitted from the action determination unit, the display control unit is configured to recognize that a mouse click operation has been performed on a part of the virtual object for operation corresponding to the virtual object of the mouse cursor when the click action was performed.
13. The display apparatus according to clause 9, 10, 11, or 12, wherein
   in a state of the display control unit controlling the display unit to display the virtual object of the mouse cursor, the display control unit is configured to control motion of the virtual object of the mouse cursor by determining a movement amount of the virtual object of the mouse cursor in the virtual image, based on an actual movement distance of the hand calculated based on the information related to the motion of the hand transmitted from the detection unit.
14. The display apparatus according to clause 1, wherein
   the display control unit is configured to control the display unit to display a three-dimensional virtual object for operation instead of the two-dimensional virtual object for operation, and
   in a state of controlling the display unit to display the three-dimensional virtual object for operation, the display control unit is configured to control display of the virtual object of the hand such that the virtual object of the hand moves on a surface of the three-dimensional virtual object for operation or on a plane formed by a top surface of the three-dimensional virtual object for operation in response to the motion of the hand of the user.
15. The display apparatus according to clause 1, wherein
   the virtual object of the hand is a two-dimensional virtual object or a three-dimensional virtual object.
16. The display apparatus according to clause 1, further comprising:
   a storage unit configured to store a learned model generated by learning video data of a person typing each key on a keyboard using each finger of the person's own hands as training data, wherein an input in the learned model is the image data of an image captured by the imaging unit in which the user performs a key input action with the user's own hand(s) while seeing a two-dimensional virtual object for operation or a three-dimensional virtual object for operation, which is modeled after a keyboard; an output in the learned model is a pair of a keyboard key and a finger of the user, corresponding to the key input action; and
   a discrimination unit configured to use, when receiving from the imaging unit the image data of a captured image in which the user performs a key input action with the user's own hand(s), the learned model stored in the storage unit to discriminate what key was typed with which one of the fingers of the hands of the user in details of the key input action appearing in the image data.
17. The display apparatus according to clause 16, wherein
   the storage unit stores finger-key correspondence information that defines in advance what key on the keyboard is typed with each finger of both hands of the user, and
   the discrimination unit is configured to use the learned model and the finger-key correspondence information that are stored in the storage unit to discriminate what key was typed with which one of the fingers of the hands of the user.
18. The display apparatus according to clause 2, further comprising
   a terminal configured separately from the wearable object,
   wherein the terminal is connected to the display unit wirelessly or by wire, and has all, one, or some of functions of the display control unit, the detection unit, and the action determination unit.
19. The display apparatus according to clause 1, wherein
   the wearable object is worn on an eye of the user.
20. The display apparatus according to clause 19, wherein
   the wearable object to be worn on an eye of the user is worn on one eye or both eyes of the user.

## Claims

1. A display apparatus configured to allow a user to see a virtual image, comprising:
a wearable object to be worn on a head of a user;
a display unit provided on the wearable object to display an original image that is an image as an original of the virtual image;
an imaging unit configured to capture an image of a hand of the user and output image data of the captured image;
a detection unit configured to detect motion of the hand of the user using the image data obtained by the imaging unit and output information related to the motion of the hand; and
a display control unit configured to control display of the virtual image by controlling the display unit,
wherein the display control unit is configured to:
control the display unit to control display of a two-dimensional virtual object for operation that is used for the user to indicate operation details with the hand and a virtual object of a hand that is modeled after the hand, as elements of the virtual image; and
control display of the virtual object of the hand such that the virtual object of hand moves on a same plane as the two-dimensional virtual object for operation in response to the motion of the hand, based on the information related to the motion of the hand transmitted from the detection unit.

2. The display apparatus according to claim 1, further comprising
an action determination unit configured to:
determine, based on the image data obtained by the imaging unit and the information related to the motion of the hand transmitted from the detection unit, whether or not the user has performed, using the hand, one of specific actions including a tap (click) action and a scroll action; and
output information related to details of the specific action made by the hand determined to have been performed as the one of specific actions,
wherein, when the information related to details of the specific action is transmitted from the action determination unit, the display control unit is configured to:
recognize the details of the specific action performed by the user; and
control display of the virtual object for operation and/or display of the virtual object of the hand in accordance with the recognized details of the specific action.

3. The display apparatus according to claim 2, wherein
when information indicating that the tap (click) action has been performed is transmitted from the action determination unit as the information related to the details of the specific action, the display control unit is configured to control display of the virtual object of the hand such that a part of the virtual object of the hand corresponding to a finger that performed the tap (click) action moves in a depth direction relative to the virtual object for operation.

4. The display apparatus according to claim 2, wherein
the virtual object for operation is a model of a keyboard, a model of a numeric keypad, or a model of a console of a remote controller, and
when information indicating that the tap (click) action has been performed is transmitted from the action determination unit as the information related to the details of the specific action, the display control unit is configured to control display of the virtual object of the hand such that a part of the virtual object of the hand corresponding to a finger that performed the tap (click) action moves in a depth direction relative to the virtual object for operation.

5. The display apparatus according to claim 2, wherein
when information indicating that the tap (click) action has been performed is transmitted from the action determination unit as the information related to the details of the specific action, the display control unit is configured to control display of the virtual object for operation such that a part of the virtual object for operation where a part of the virtual object of the hand corresponding to a finger that performed the tap (click) action is positioned is displayed in a display form including a highlighting form wherein the display form is different from a default display form.

6. The display apparatus according to claim 2, wherein
the virtual object for operation is a model of a keyboard, a model of a numeric keypad, or a model of a console of a remote controller, and
when information indicating that the tap (click) action has been performed is transmitted from the action determination unit as the information related to the details of the specific action, the display control unit is configured to control display of the virtual object for operation such that a part of the virtual object for operation where a part of the virtual object of the hand corresponding to a finger that performed the tap (click) action is positioned is displayed in a display form including a highlighting form wherein the display form is different from a default display form.

7. The display apparatus according to claim 1, wherein
the imaging unit has a function as a distance measurement unit configured to measure a distance to the hand of the user and output distance data of the measured distance,
the detection unit is configured to calculate three-dimensional position information for identifying the hand based on the image data and the distance data obtained by the imaging unit, and acquire the calculated three-dimensional position information as the information related to the motion of the hand, and
the display control unit is configured to determine a display position of the virtual object of the hand on the virtual object for operation, based on the three-dimensional position information for identifying the hand transmitted from the detection unit.

8. The display apparatus according to claim 1, further comprising
a position information measurement unit configured to measure three-dimensional position information of the hand of the user in an optionally set three-dimensional coordinate system, and acquire the measured three-dimensional position information as the information related to the motion of the hand,
wherein the display control unit is configured to determine a display position of the virtual object of the hand on the virtual object for operation, based on the three-dimensional position information for identifying the hand transmitted from the position information measurement unit.

9. The display apparatus according to claim 2, wherein
the detection unit is configured to determine whether or not one, some, or all of fingers of the hand of the user are clenched, based on the image data obtained by the imaging unit, and when one, some, or all of fingers of the hand of the user are determined to be clenched, output information indicating that one, some, or all of fingers of the hand of the user are clenched, and
when the information indicating that one, some, or all of fingers of the hand of the user are clenched is transmitted from the detection unit,
the display control unit is configured to:
use, at user's option, a virtual object of a mouse body that is modeled after a mouse body and a virtual object of a mouse cursor that is modeled after a mouse cursor, instead of the virtual object of the hand, to display the virtual object of the mouse body at a predetermined location in the virtual image; and
control, based on the information related to the motion of the hand transmitted from the detection unit, display of the virtual object of the mouse cursor such that the virtual object of the mouse cursor moves on a same plane as the virtual object for operation in response to the motion of the hand.

10. The display apparatus according to claim 9, wherein
in a state of the display control unit controlling the display unit to display the virtual object of the mouse cursor, the display control unit is configured to control motion of the virtual object of the mouse cursor by determining a movement amount of the virtual object of the mouse cursor in the virtual image, based on an actual movement distance of the hand calculated based on the information related to the motion of the hand transmitted from the detection unit.

11. The display apparatus according to claim 1, wherein
the display control unit is configured to control the display unit to display a three-dimensional virtual object for operation instead of the two-dimensional virtual object for operation, and
in a state of controlling the display unit to display the three-dimensional virtual object for operation, the display control unit is configured to control display of the virtual object of the hand such that the virtual object of the hand moves on a surface of the three-dimensional virtual object for operation or on a plane formed by a top surface of the three-dimensional virtual object for operation in response to the motion of the hand of the user.

12. The display apparatus according to claim 1, wherein
the virtual object of the hand is a two-dimensional virtual object or a three-dimensional virtual object.

13. The display apparatus according to claim 1, further comprising:
a storage unit configured to store a learned model generated by learning video data of a person typing each key on a keyboard using each finger of the person's own hands as training data, wherein an input in the learned model is the image data of an image captured by the imaging unit in which the user performs a key input action with the user's own hand(s) while seeing a two-dimensional virtual object for operation or a three-dimensional virtual object for operation, which is modeled after a keyboard; an output in the learned model is a pair of a keyboard key and a finger of the user, corresponding to the key input action; and
a discrimination unit configured to use, when receiving from the imaging unit the image data of a captured image in which the user performs a key input action with the user's own hand(s), the learned model stored in the storage unit to discriminate what key was typed with which one of the fingers of the hands of the user in details of the key input action appearing in the image data.

14. The display apparatus according to claim 13, wherein
the storage unit stores finger-key correspondence information that defines in advance what key on the keyboard is typed with each finger of both hands of the user, and
the discrimination unit is configured to use the learned model and the finger-key correspondence information that are stored in the storage unit to discriminate what key was typed with which one of the fingers of the hands of the user.

15. The display apparatus according to claim 2, further comprising
a terminal configured separately from the wearable object,
wherein the terminal is connected to the display unit wirelessly or by wire, and has all, one, or some of functions of the display control unit, the detection unit, and the action determination unit.

16. The display apparatus according to claim 1, wherein
the wearable object is worn on an eye of the user.

17. The display apparatus according to claim 16, wherein
the wearable object to be worn on an eye of the user is worn on one eye or both eyes of the user.
